# EUROPÄISCHE PATENTANMELDUNG

(11) **EP 2 998 714 A1**
(43) Veröffentlichungstag der Anmeldung: **23.03.2016**
(21) Anmeldenummer: 14185627.8
(22) Anmeldetag: 19.09.2014
(51) Int. Cl.: G01J 3/02, G01J 3/06, G01J 3/10, G01J 3/42

(54) **THz-Spektrometer**

(71) Anmelder: PHILIPPS-UNIVERSITÄT MARBURG, 35037 Marburg (DE)
(72) Erfinder: Probst, Thorsten, 35037 Marburg (DE); Rehn, Arno, 35037 Marburg (DE)
(74) Vertreter: Stumpf, Peter

(57) **Zusammenfassung**

Die Erfindung betrifft ein Terahertz(THz)-Spektrometer, das einen einfachen und kompakten Aufbau aufweist und mit kostengünstigen Standardkomponenten realisierbar ist. Es ist mit einem verschiebbaren Strahlumlenker ausgestattet, der es gestattet, die Längen von THz-Emitterpfad und THz-Detektorpfad gleichzeitig zu ändern.

## Beschreibung

### Gebiet der Erfindung

Die Erfindung betrifft ein Terahertz(THz)-Spektrometer, das einen einfachen und kompakten Aufbau aufweist und mit kostengünstigen Standardkomponenten realisierbar ist.

### Stand der Technik

Der THz-Frequenzbereich ist im elektromagnetischen Spektrum zwischen dem Mikrowellen- und dem infraroten Frequenzbereich lokalisiert und erstreckt sich von ca. 0,1 THz bis 10 THz.

THz-Spektrometer nutzen zur Messung von THz-Signalen das Prinzip der kohärenten Detektion, wobei ein optisches Ausgangssignal einer Laserquelle in (bis auf einen konstanten Faktor) identische Anrege- und Abfragesignale zerlegt wird. Das Anregesignal wird zur Erzeugung eines THz-Signals und das Abfragesignal zur Detektion dieses THz-Signals, das vorher in Wechselwirkung mit einer Probe treten kann, genutzt. Bei der Detektion werden Amplituden- und Phaseninformation des THz-Signals erfasst.

THz-Spektrometer sind gemäß dem Stand der Technik in verschiedenen Varianten ausführbar, die unter den Abkürzungen THz-TDS (THz Time Domain Spectrometer), THz-QTDS (THz Quasi Time Domain Spectrometer) und THz-CW (THz Continuous Wave Spectrometer) bekannt sind.

### THz-TDS-Spektrometer

Der meistverbreitete Aufbau, das THz-Zeitbereichsspektrometer (THz Time Domain Spectrometer, THz-TDS) umfasst einen Femtosekundenlaser (fs-Laser), einen Stahlteiler, eine Verzögerungsstrecke, eine THz-Emitter- und eine THz-Detektorantenne. Unter THz-Antennen sind in dieser Anmeldung sowohl photoleitende Antennen als auch elektrooptische Kristalle und andere zur Emission bzw. Detektion von THz-Strahlung geeignete Baugruppen zu verstehen. Zwischen dem fs-Laser und den THz-Antennen erstreckt sich der optische Pfad, der durch den Strahlteiler in einen Emitterpfad der Länge a und einen Detektorpfad der Länge b aufgespalten wird. Zwischen der THz-Emitterantenne und der THz-Detektorantenne erstreckt sich ein THz-Pfad der Länge c, in dessen Bereich eine Probe platzierbar ist. In den Emitter- oder den Detektorpfad wird die Verzögerungsstrecke integriert. Die durch die Verzögerungsstrecke bedingte Verlängerung des einen Pfades wird durch eine Kompensationsstrecke gleicher Länge im anderen Pfad ausgeglichen werden. Das Spektrometer weist mit dem fs-Laser, den THz-Antennen und der Verzögerungsstrecke mehrere sehr teure Komponenten auf, die den breiten Einsatz von THz-TDS-Systemen in der industriellen Praxis bisher verhindern.

Es sind modifizierte Aufbauten für THz-TDS-Systeme bekannt, die in der Literatur z. B. unter Asynchronous Optical Sampling (ASOPS), Optical Sampling by Cavity Tuning (OSCAT), Electronically Controlled Optical Sampling (ECOPS) beschrieben werden. Zunehmend werden störanfällige Freistrahlaufbauten durch fasergekoppelte Strahlführungen ersetzt, die flexibler konfiguriert werden können. Diese modifizierten Aufbauten sind jedoch nicht mit einer deutlichen Kostensenkung verbunden, sondern sind in einigen Fällen sogar teurer. So wird z. B. bei ASOPS zwar die Verzögerungsstrecke eliminiert, jedoch wird ein zweiter fs-Laser benötigt. Zudem beeinträchtigen auf die Glasfasern einwirkende Temperaturänderungen und Vibrationen die Phasenstabilität und die Ausbreitungsgeschwindigkeit von in den Fasern transportierten Signalen, woraus fehleranfällige Pulsformen und Pulspositionen resultieren.

### THz-QTDS-Spektrometer

Eine wesentliche Kostensenkung ist möglich, indem anstelle eines fs-Lasers eine Laserdiode zur Erzeugung des Ausgangssignals genutzt wird.

In: O. Morikawa et al.: "A cross-correlation spectroscopy in subterahertz region using an incoherent light source", Applied Physics Letters 76 (2000) 1519-1521, wird ein THz-Spektrometer beschrieben, bei dem ein aufwendiger fs-Laser durch eine kostengünstige Multimode-Laserlichtquelle (MMLD) ersetzt wird. Diesem kostengünstigen und kompakten Aufbau steht jedoch ein im Vergleich zu THz-TDS-Systemen geringes Signal-RauschVerhältnis gegenüber.

In der DE 10 2009 036 111 B3 wird ein verbessertes Spektrometer unter Verwendung einer MMLD, deren Ausgangssignal im Frequenzraum äquidistante longitudinale Moden mit einem Modenabstand Δf aufweist, sowie ein Verfahren zur Datenauswertung offenbart. Diese Anmeldung zeigt, dass an der THz-Empfängerantenne ein nahezu periodisches Signal (quasiperiodisches Signal, THz-Quasipulsfolge) mit einer Periodendauer T = 1/Δf detektiert werden kann, das qualitativ dem Signal konventioneller THz-TDS-Systeme, also einer THz-Pulsfolge, entspricht und mit den für solche Systeme entwickelten Algorithmen ausgewertet werden kann. Vorrichtung und Verfahren werden daher in der Literatur als THz-QTDS (THz-Quasizeitbereichsspektrometer/-spektroskopie) bezeichnet. Ein wesentlicher quantitativer Unterschied zwischen THz-TDS und THz-QTDS besteht in der sehr verschiedenen Periodendauer T. Während ein typischer fs-Laser mit einer Pulsfrequenz f ≈ 100 MHz arbeitet, was einer Periodendauer T von ca. 10 ns entspricht, liegt der Modenabstand Δf einer MMLD bei typischerweise 25 GHz, woraus eine weitaus kürzere Periodendauer T = 40 ps resultiert.

Der Aufbau gemäß der DE 10 2009 036 111 B3 beinhaltet, analog zum konventionellen THz-TDS-Aufbau, eine Verzögerungsstrecke, die entweder im Emitterpfad oder im Detektorpfad angeordnet ist, und eine Kompensationsstrecke im jeweils anderen Pfad. Verzögerungsstrecke, Kompensationsstrecke und notwendige Umlenkspiegel beeinträchtigen die Kompaktheit des Aufbaus und tragen auch zu den Gesamtkosten des THz-Systems bei. Sie stehen einer industriellen Anwendung entgegen, wo kompakte und kostengünstige Lösungen gefordert sind.

### THz-CW-Spektrometer

Bekannt sind außerdem THz-CW-Systeme, die als Laserquellen Laserdioden einsetzen, welche ein kontinuierliches Signal emittieren. Die hierzu benötigten Laserdioden sind zwar kostengünstiger als fs-Laser, aber trotzdem noch sehr teuer. Einsetzbar sind Laserdioden, die kontinuierliche Signale bei zwei Frequenzen f₁, f₂, die durchstimmbar sein können, emittieren, wobei die Differenzfrequenz |f₁-f₂| im THz-Bereich liegt. Alternativ kann eine aus zwei gleichartigen Single-Mode-Laserdioden, vorzugsweise DFB-Laserdioden (distributed feedback laser diodes), bestehende Laserquelle verwendet werden, deren Frequenzen durchstimmbar sein können. Nachteilig sind neben den Kosten der genannten Dioden die langen Messzeiten, da das THz-Spektrum punktweise im Frequenzbereich aufgenommen wird.

### Aufbau und Funktionsweise eines THz-Spektrometers nach dem Stand der Technik

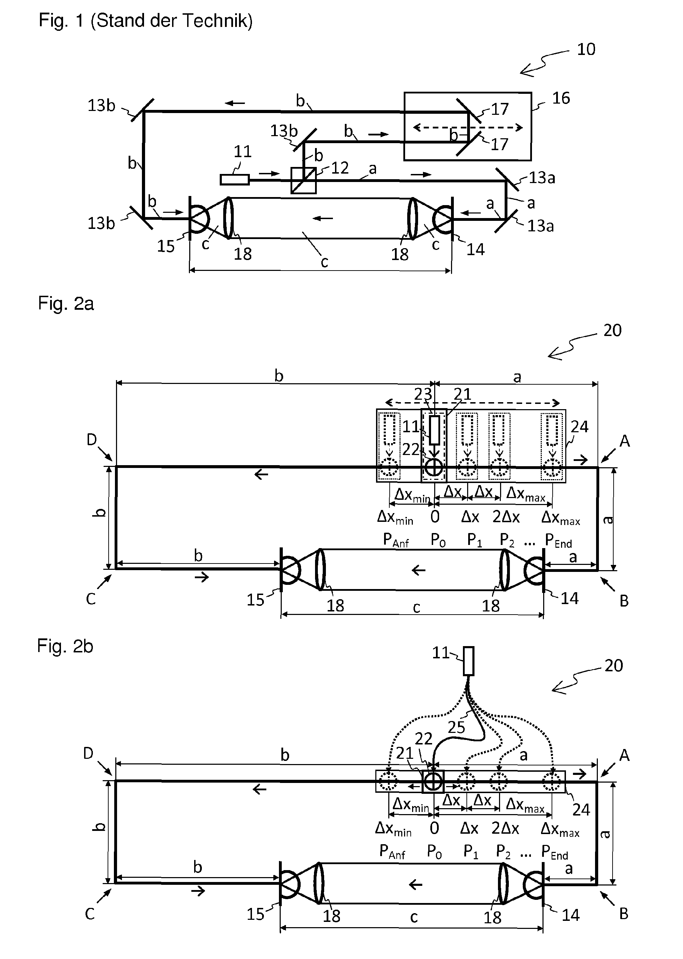

Eine schematische Darstellung eines solchen bekannten THz-Spektrometers 10, das für THz-TDS-, THz-QTDS- und THz-CW-Messungen geeignet ist, zeigt Fig. 1. Eine Laserquelle 11 erzeugt ein Laserausgangssignal, das durch einen Strahlteiler 12 in ein Anregesignal und ein Abfragesignal zerlegt wird. Das Anregesignal wird auf einem Emitterpfad, dessen Abschnitte durch den Buchstaben a gekennzeichnet sind, über zwei Umlenkspiegel 13a zu einer THz-Emitterantenne 14 geführt, während das Abfragesignal auf einem Detektorpfad, dessen Abschnitte durch den Buchstaben b gekennzeichnet sind, über einen Umlenkspiegel 13b zunächst zur Verzögerungsstrecke 16 und dann, nach Durchlaufen derselben, über zwei weitere Umlenkspiegel 13b, zu einer THz-Detektorantenne 15 geführt wird. Die Verzögerungsstrecke 16 weist zwei definiert in Richtung des gestrichelten Doppelpfeils verschiebbare Umlenkspiegel 17 auf, mit denen die Pfadlänge des Detektorpfads in einer gewünschten Schrittweite durchgestimmt werden kann.

Als Laserquelle 11 wird für TDS bevorzugt ein fs-Laser, für QTDS werden geeignete Laserdioden, insb. Multimode-Laserdioden (MMLD), eingesetzt. Emitter- und Detektorantenne 14, 15 sind bevorzugt als photoleitende Antennen ausgeführt. Zwischen THz-Emitterantenne 14 und THz-Detektorantenne 15 erstreckt sich ein aus drei Abschnitten, die durch den Buchstaben c bezeichnet sind, bestehender THz-Pfad, dessen mittlerer, zwischen den THz-Linsen 18 befindlicher Abschnitt kollimiert ist. In diesem mittleren Abschnitt kann eine zu untersuchende Probe (nicht dargestellt) positioniert und von einem THz-Signal durchlaufen werden. Die Gesamtlänge des THz-Pfads ist durch den unterhalb der Anordnung eingezeichneten Doppelpfeil gekennzeichnet. Neben dem in Fig. 1 dargestellten kollimierten THz-Strahlengang sind weitere Ausführungen aus dem Stand der Technik bekannt, z. B. ein fokussierender Strahlengang (Fokus vorzugsweise in einer Probenebene) oder ein Strahlengang mit Reflexion an einer Probe. Die Laufrichtung der Signale in der Anordnung wird durch mehrere kurze Pfeile in den waagerechten Pfadabschnitten markiert.

Für alle Anordnungen gilt die Längenkonvention a+c=b, wobei a, b, c hier jeweils die optischen Gesamtlängen von Emitter-, Detektor- und THz-Pfad sind. In Nullstellung der Verzögerungsstrecke 16 (keine Verzögerung zwischen Anrege- und Abfragesignal) ist diese Bedingung exakt erfüllt. Die Messung eines THz-Signals erfolgt, indem die Spiegel 17 der Verzögerungsstrecke 16 gegenüber dieser Nullstellung in einem vorgegebenen Intervall verfahren werden.

Durch die Einhaltung der Längenkonvention (bis auf Abweichungen im vorgegebenen Intervall) wird sichergestellt, dass mit identischen Anrege- und Abfragesignalen, die aus demselben Ausgangssignal einer Laserquelle hervorgegangen sind, an der THz-Emitterantenne angeregt und an der THz-Detektorantenne detektiert wird.

Die Qualität der mit einem solchen Aufbau aufgenommenen Spektren (z. B. die korrekte Absolutposition von Absorptionslinien und anderen spektralen Merkmalen im Frequenzbereich sowie ein hohes Signal/Rausch-Verhältnis) wird wesentlich durch die zum Einsatz kommende Verzögerungsstrecke 16 bestimmt. Üblicherweise verwendet werden deshalb hochwertige Verzögerungsstrecken, bei denen Verzögerungszeit und Ortsposition eine Ibekannte Beziehung aufweisen. Diese sind sehr teuer, was zu den nachteilig hohen Kosten des Gesamtsystems beiträgt.

Alle Anordnungen sind mit einer (nicht dargestellten) Steuer-, Mess- und Auswerteelektronik (SMA) verbunden.

### Aufgabe der Erfindung

Die Aufgabe der vorliegenden Erfindung besteht darin, die genannten Nachteile des Standes der Technik zu beseitigen und ein THz-Spektrometer mit einem wesentlich kostengünstigeren, kompakteren und robusteren Aufbau bereitzustellen. Das THz-Spektrometer soll, unter Verwendung der jeweils erforderlichen Laserquellen, als THz-TDS-, THz-QTDS- oder als THz-CW-Spektrometer einsetzbar sein. Die teuren Verzögerungsstrecken konventioneller THz-Spektrometer sollen durch kostengünstige Alternativen ersetzt werden, die so zu konfigurieren sind, dass THz-Signale mit dem Stand der Technik entsprechender Qualität, also mit korrekter Zeitachse und hohem Signal/RauschVerhältnis, messbar sind.

### Lösung der Aufgabe

Diese Aufgabe wird gelöst durch ein THz-Spektrometer, dessen Aufbau sich von dem bekannten Aufbau erfindungsgemäß wie folgt unterscheidet: Der bekannte Strahlteiler, der das Ausgangssignal einer Laserquelle in zwei um 90° richtungsversetzte Signale (Anrege-, Abfragesignal) aufteilt, wird ersetzt durch einen Strahlumlenker, mit welchem das Ausgangssignal der Laserquelle in ein Anrege- und ein Abfragesignal aufteilbar und auf zwei Pfade gleicher Richtung mit entgegengesetztem Richtungssinn (Emitterpfad und Detektorpfad) lenkbar ist. Die Abstrahlrichtungen von Anrege- und Abfragesignal sind somit um 180° versetzbar, sodass die beiden Signale antiparallel emittierbar sind. Durch die Anordnung des Strahlumlenkers auf der Verschiebeeinheit eines Verschiebetisches ist eine definierte Verschiebung des Strahlumlenkers in der Richtung von Emitter- und Detektorpfad realisierbar. Es genügt die Ausführung des Verschiebetisches als Lineartisch, der nur eine Verschiebung der Verschiebeeinheit in einer Richtung (der Richtung von Emitterpfad und Detektorpfad) zulässt. Eine solche Verschiebung der Verschiebeeinheit mit dem Strahlumlenker erlaubt eine definierte Verlängerung eines dieser Pfade und eine betragsmäßig gleiche Verkürzung des anderen Pfades, wobei die Summe der Pfadlängen konstant bleibt. Da die Laufzeit von Anrege- und Abfragesignal proportional zur jeweils durchlaufenen Pfadlänge ist, ist durch die definierte Verschiebung des Strahlumlenkers eine gewünschte zeitliche Verzögerung von Abfrage- und Anregesignal relativ zueinander einstellbar und mit einer gewünschten Schrittweite veränderbar. Der auf dem Verschiebetisch verschiebbare Strahlumlenker übernimmt somit die Funktion der in bekannten THz-Spektrometern enthaltenen Verzögerungsstrecke, sodass diese und die zugehörige Kompensationsstrecke verzichtbar sind. Die Länge der optischen Pfade im Spektrometer wird somit verkürzt, die Anzahl der Komponenten verringert, was einen kompakten und robusten Aufbau ermöglicht. Ein durch das Anregesignal an einer THz-Emitterantenne ausgelöstes THz-Signal ist an einer mit dem identischen zeitverzögerten Abfragesignal beaufschlagten THz-Detektorantenne in kohärenter Detektion im Sampling-Verfahren punktweise messbar.

In besonders vorteilhafter Weise wird der Verschiebetisch mit einer aus einem kommerziell verfügbaren optischen Laufwerk entnommenen Verschiebeeinheit ausgestattet und für die Verwendung im erfindungsgemäßen Spektrometer kalibriert. Die Kalibrierung umfasst die Ermittlung der funktionellen Abhängigkeit der zeitlichen Verzögerung von der Ortsposition der Verschiebeeinheit durch die Messung eines THz-Signals über einen ausgedehnten, dem verfügbaren lateralen Verschiebebereich entsprechenden, Zeitbereich, wobei die Zeitpositionen von Merkmalen mit bekannten, vorzugsweise äquidistanten, Zeitabständen, den jeweiligen Ortspositionen der Verschiebeeinheit zugeordnet werden. Dieses erfindungsgemäße Verfahren zur Ermittlung der funktionellen Abhängigkeit der zeitlichen Verzögerung von der Ortsposition der Verschiebeeinheit wird als Selbstreferenzierung bezeichnet.

Das Ausgangssignal der Laserquelle ist sowohl im Freistrahl als auch über eine optische Faser in den Strahlumlenker einkoppelbar.

Bei Einkopplung im Freistrahl wird die Laserquelle zusammen mit dem Strahlumlenker auf der Verschiebeeinheit platziert, sodass die Laserquelle und der Strahlumlenker relativ zueinander fixiert sind, also eine starre Anordnung in Form eines kompakten Moduls zueinander einnehmen. Aufgrund dieser starren Anordnung von Laserquelle und Strahlumlenker relativ zueinander bleibt eine einmal vorgenommene Justierung des Aufbaus dauerhaft erhalten.

Bei Einkopplung über eine optische Faser kann die Laserquelle in gleicher Weise auf der Verschiebeeinheit fixiert werden und mit dem Strahlumlenker ein Modul bilden. Sie kann aber auch, aufgrund der flexiblen Faserführung, getrennt von der Verschiebeeinheit an einer frei wählbaren Position des Verschiebetisches oder getrennt von diesem platziert werden. Natürlich ist die Position so zu wählen, dass die Bewegung der Verschiebeeinheit nicht behindert wird.

Ebenso beinhaltet die Erfindung verschiedenartige Strahlführungen, um die vom Strahlumlenker emittierten Signale (Anrege- und Abfragesignal) zur THz-Emitter- bzw. zur THz-Detektorantenne zu führen. Diese Strahlführung ist als Freistrahlführung, z. B. über geeignet positionierte Umlenkspiegel, realisierbar. Alternativ ist sie auch kombiniert im Freistrahl und fasergekoppelt realisierbar, indem die Signale im Bereich des Verschiebetisches eine Strecke im Freistrahl durchlaufen, dann in optische Fasern eingekoppelt und in diesen zu den THz-Antennen geführt werden. Hierbei ist der Strahlumlenker bevorzugt als Fasersplitter mit einer optischen Faser als Eingang und zwei optischen Fasern als Ausgänge ausgeführt, der sowohl auf der Verschiebeeinheit als auch an einer anderen, frei wählbaren, Position platziert werden kann. Im letztgenannten Fall verbleiben auf der Verschiebeeinheit lediglich zwei mit dem Fasersplitter über die als Ausgänge fungierenden optischen Fasern verbundene Auskoppelelemente, in einer besonderen Ausführungsform sogar nur ein solches Auskoppelelement.

### Detaillierte Darstellung der erfindungsgemäßen Lösung

Das nachfolgende detailliert beschriebene erfindungsgemäße THz-Spektrometer ist für alle Varianten der THz-Spektrometrie, die die kohärente Detektion nutzen, einsetzbar, insbesondere für die THz-Zeitbereichsspektrometrie (THz-TDS = THz Time Domain Spectrometry), die THz-Quasizeitbereichsspektrometrie (THz-QTDS) und die THz-Dauerstrich-Spektrometrie (THz-CW = THz Continuous Wave Spectrometry). Dabei sind alle für die genannten Varianten bekannten Laserquellen verwendbar, vorzugsweise fs-Laser (für THz-TDS), Multimode-Laserdioden (für THz-QTDS) und DFB-Laserdioden (für THz-CW-Spektrometer). Ebenso sind auch die THz-Emitter- und die THz-Detektorantennen verschiedenartig ausführbar. Bevorzugt werden photoleitfähige Antennen auf Basis von LT-GaAs oder von anderen geeigneten Substraten, z. B. InGaAs, eingesetzt, es sind aber auch elektrooptische Kristalle verwendbar.

### Aufbau des THz-Spektrometers

Grundsätzlich weist das erfindungsgemäße THz-Spektrometer 20 den in Fig. 2a und Fig. 2b schematisch dargestellten Aufbau auf. Eine wesentliche Komponente der Erfindung ist ein auf einer Verschiebeeinheit 21 eines Verschiebetisches 24 angeordneter Strahlumlenker 22, in den das Ausgangssignal einer Laserquelle 11 einkoppelbar ist.

In einer ersten Ausführungsform der Erfindung, dargestellt in Fig. 2a, ist die Laserquelle 11 ebenfalls auf der Verschiebeeinheit 21 des Verschiebetisches 24 angeordnet und dadurch relativ zum Strahlumlenker 22 fixiert. Laserquelle 11 und Strahlumlenker 22 bilden in diesem Fall eine starre Anordnung in Form eines kompakten Moduls 23, das als Ganzes mit der Verschiebeeinheit 21 verschiebbar ist. Laserquelle 11 und Strahlumlenker 22 sind relativ zueinander so positioniert, dass ein Ausgangssignal der Laserquelle 11 im Freistrahl in den Strahlumlenker 22 einkoppelbar ist.

In einer zweiten Ausführungsform der Erfindung, dargestellt in Fig. 2b, ist die Laserquelle 11 außerhalb des Verschiebetisches 24 fest positioniert und über eine flexible optische Faser 25 mit dem Strahlumlenker 22 verbunden. Die optische Faser 25 ist hinreichend lang ausgeführt, dass sie bei der Bewegung des Strahlumlenkers 22 nicht unter mechanische Spannung gesetzt wird. Über die optische Faser 25 ist ein von der Laserquelle 11 emittiertes Ausgangssignal in den Strahlumlenker 22 einkoppelbar. In einer weiteren (nicht dargestellten) Ausführungsform ist die Laserquelle 11 beliebig auf dem Verschiebetisch 24 angeordnet oder mit diesem verbunden, wobei wiederum eine optische Faser zur Einkopplung eines Ausgangssignals der Laserquelle 11 in den Strahlumlenker 22 vorgesehen ist.

Im Strahlumlenker 22 ist das eingekoppelte Ausgangssignal der Laserquelle 11 in ein Anrege- und ein Abfragesignal zerlegbar, welche auf zwei Pfade mit derselben Richtung, jedoch mit entgegengesetztem Richtungssinn, lenkbar sind.

Der Pfad, auf den das Anregesignal lenkbar ist, wird als Emitterpfad, der Pfad, auf den das Abfragesignal lenkbar ist, als Detektorpfad bezeichnet. Über Umlenkspiegel führen Emitterpfad bzw. Detektorpfad zu einer THz-Emitterantenne 14 bzw. zu einer THz-Detektorantenne 15.

Zwischen THz-Emitterantenne 14 und THz-Detektorantenne 15 erstreckt sich ein THz-Pfad, in dem zwei THz-Linsen 18 platziert sind, deren Brennweite und Position so gewählt sind, dass zwischen ihnen eine kollimierte THz-Strahlführung, am Ort der THz-Detektorantenne 15 aber wieder eine Fokussierung, realisiert wird. Im Bereich des kollimierten THz-Strahls ist eine Probe, die nicht Teil des THz-Spektrometers 20 ist, positionierbar. Andere THz-Strahlführungen, z. B. eine Fokussierung auf eine solche Probe, sind möglich. Anstelle der THz-Linsen sind auch Parabolspiegel einsetzbar. Derartige (hier nicht dargestellte) THz-Strahlführungen, z. B. mit 2 oder 4 off-axis-Parabolspiegeln oder in Reflexionsanordnung, sind aus dem Stand der Technik bekannt.

Die THz-Emitterantenne 14 ist durch das Anregesignal zur Emission eines THz-Signals in den THz-Pfad anregbar, welches (ggf. nach Durchlaufen einer im THz-Pfad positionierten Probe) mithilfe der durch das Abfragesignal modulierten THz-Detektorantenne 15 detektierbar ist.

Bevorzugt wird ein sehr einfacher Strahlengang realisiert, bei dem die drei Pfade (Emitterpfad, Detektorpfad, THz-Pfad) einen rechteckförmigen Gesamtverlauf mit den Eckpunkten A, B, C, D aufweisen. Dazu sind (analog zu Fig. 1) vier Umlenkspiegel in den Eckpunkten A, B, C, D positioniert, die aus Gründen der Übersichtlichkeit in Fig. 2a und Fig. 2b nicht dargestellt sind. Im Interesse eines kompakten Aufbaus sollten die von Baugruppen freien Abschnitte des Strahlengangs (AB, CD in Fig. 2a und Fig. 2b) so kurz wie möglich ausgeführt werden.

In Fig. 2a und Fig. 2b sind die Abschnitte des Emitterpfads mit dem Buchstaben a, die Abschnitte des Detektorpfads mit dem Buchstaben b und der bei der hier gewählten Anordnung geradlinig verlaufende THz-Pfad mit dem Buchstaben c bezeichnet. Die Buchstaben a, b, c bezeichnen außerdem die optischen Gesamtlängen dieser Pfade. Die bekannte Längenkonvention a+c=b ist exakt erfüllt, wenn sich der Strahlumlenker 22 bzw. das Modul 23 in der in Fig. 2a durch den Punkt P₀ bezeichneten Position (Nullstellung, keine Verzögerung zwischen Anrege- und Abfragesignal) befinden. Die Messung eines THz-Signals erfolgt, indem die Verschiebeeinheit 21 mit dem Strahlumlenker 22 bzw. dem Modul 23 relativ zu dieser Nullstellung eine vorgewählte Strecke auf dem Verschiebetisch 24 durchfährt.

In beiden Ausführungsformen (Fig. 2a, 2b) ist der Strahlengang von Emitter- und Detektorpfad im Freistrahl ausgeführt. Es ist für den Fachmann offensichtlich, dass vielfältige Modifizierungen dieses Strahlengangs möglich sind, beispielsweise trapezförmige Strahlengänge, die leicht durch eine entsprechende Verschiebung und Drehung der Umlenkspiegel realisierbar sind.

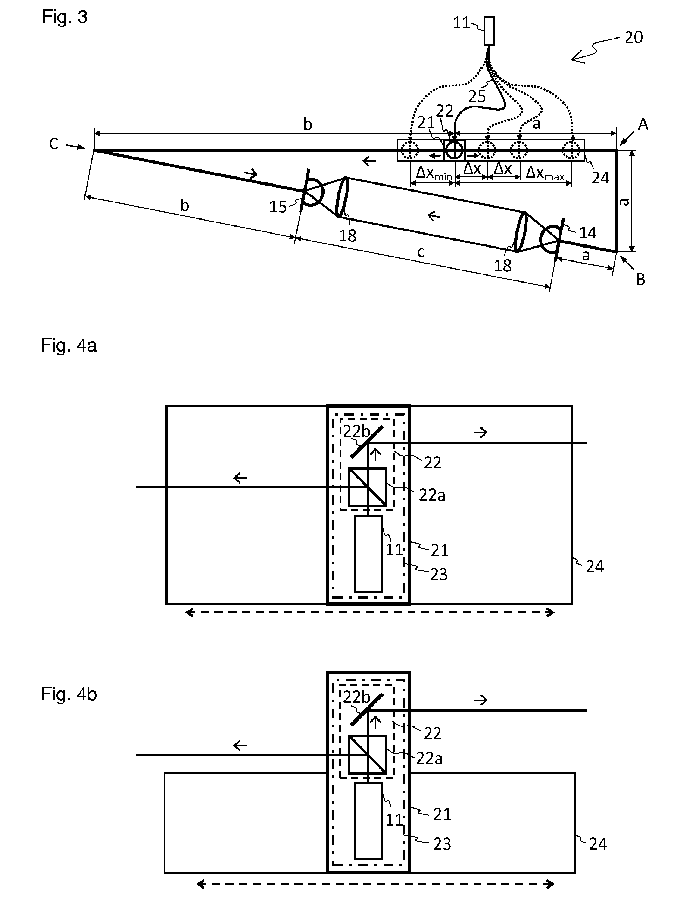

In einer weiteren Ausführungsform (Fig. 3) wird ein noch weiter vereinfachter, dreieckiger Strahlengang realisiert, wodurch die Zahl der nötigen Umlenkspiegel, die sich (nicht dargestellt) an den Punkten A, B, C befinden, auf drei reduziert wird. Die Form des Dreiecks ist variierbar, beispielsweise kann ein langgestrecktes rechtwinkliges Dreieck, wie in Fig. 3 schematisch dargestellt, gewählt werden. Ebenfalls geeignet ist ein gleichschenkliges Dreieck mit kurzer Basis AB. In beiden Varianten werden der Verschiebetisch 24 und (durch entsprechende Positionierung der Umlenkspiegel und der THz-Antennen 14 und 15) der THz-Pfad auf den längeren Seiten des Dreiecks angeordnet.

Neben der in Fig. 2a, b und Fig. 3 dargestellten Ausführung von Emitter- und Detektorpfad im Freistrahl ist auch eine Kombination aus Freistrahlführung und fasergekoppelter Strahlführung realisierbar. Dabei ist zumindest ein Abschnitt, in dem der Strahlumlenker 22 (bzw. das Modul 23) mit der Verschiebeeinheit 21 auf dem Verschiebetisch 24 verschiebbar ist, als Freistrahlführung gestaltet. Dieser Abschnitt erlaubt eine gleichzeitige Änderung der Längen von Emitter- und Detektorpfad. Beidseitig angrenzend an diesen Abschnitt sind optische Fasern platziert, in die das Anrege- sowie das Abfragesignal einkoppelbar und zur THz-Emitterantenne 14 sowie zur THz-Detektorantenne 15 leitbar ist. Dieser Aufbau ist, da Umlenkspiegel verzichtbar sind, robuster als ein reiner Freistrahlaufbau. Er wird im nachfolgenden Abschnitt und in Fig. 5a detailliert dargestellt.

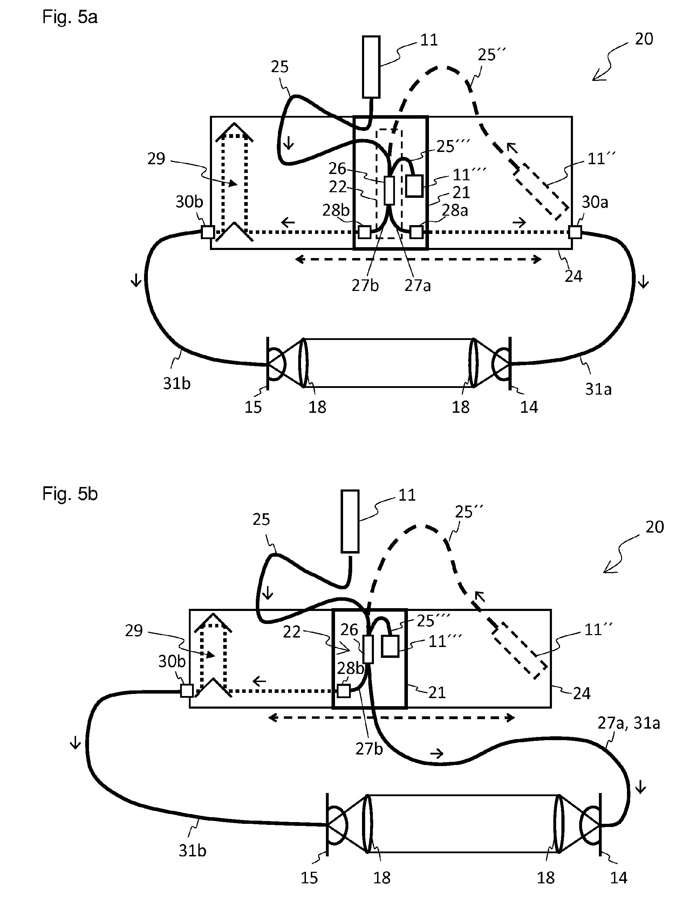

Weitere Varianten sind einsetzbar: Z. B. ist der Emitterpfad vollständig faserkoppelt ausführbar, während der Detektorpfad zumindest einen Freistrahlabschnitt aufweist, was ebenfalls im nachfolgenden Abschnitt und in Fig. 5b detailliert dargestellt wird.

In allen Ausführungsformen verfügt das erfindungsgemäße THz-Spektrometer 20 über eine (nicht dargestellte) Steuer-, Mess- und Auswerteelektronik (SMA).

Das THz-Spektrometer 20 ist, indem es in einem robusten und leichten Gehäuse untergebracht wird, als portables Handgerät ausführbar.

### Ausführungsformen des Strahlumlenkers

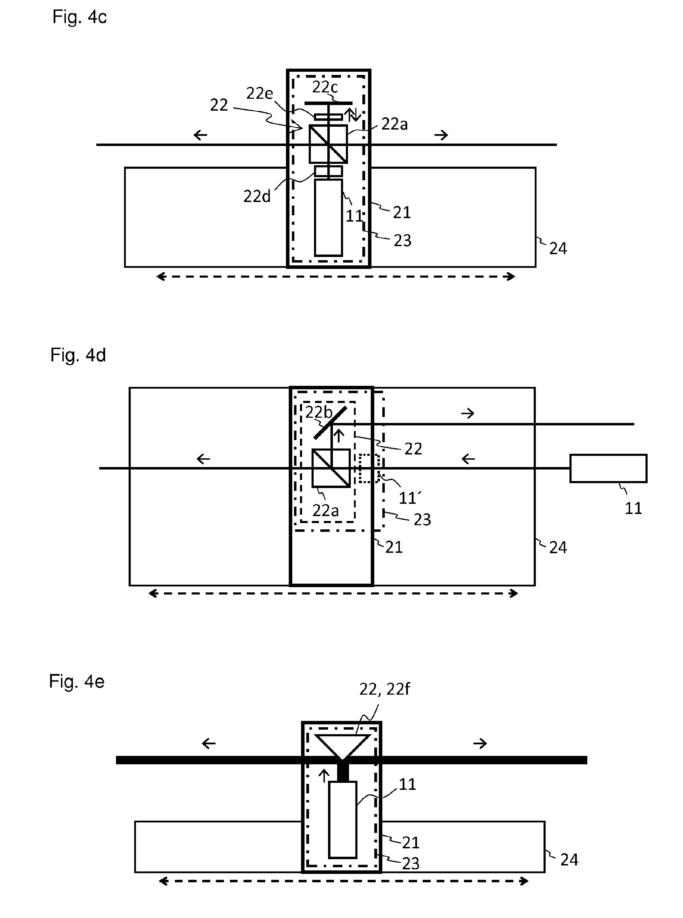

Eine wesentliche Komponente des Spektrometers ist der Strahlumlenker 22, der in Fig. 2a, b und Fig. 3 lediglich als Kreis mit senkrechtem Durchmesser symbolisiert ist. Konkrete Ausführungsformen des Strahlumlenkers werden nachfolgend beschrieben und in Fig. 4 und 5 detailliert dargestellt.

Fig. 4a-e zeigen Strahlumlenker 22, die für Freistrahlanordnungen vorgesehen sind. Das von einer Laserquelle 11 gelieferte Ausgangssignal wird als Freistrahl in den Strahlumlenker eingekoppelt. Laserquelle 11 und Strahlumlenker werden dazu so angeordnet, dass das von der Laserquelle ausgesandte Signal stets auf den Einkoppelbereich des Strahlumlenkers trifft. Das ist erreichbar, indem Laserquelle und Strahlumlenker starr zueinander angeordnet als kompaktes Modul 23 (rechteckig mit einer Strichpunktlinie umrandet) auf der Verschiebeeinheit 21 des Verschiebetisches 24 positioniert werden. Der Bereich und die Richtung, in denen die Verschiebeeinheit 21 verschiebbar ist, sind durch einen gestrichelten Doppelpfeil gekennzeichnet.

Im Strahlumlenker 22 wird das Ausgangssignal der Laserquelle 11 in ein Anregesignal und ein Abfragesignal geteilt, welche als Freistrahlen aus dem Strahlumlenker austreten und in die gleiche Richtung, jedoch mit entgegengesetztem Richtungssinn (d. h. antiparallel), gelenkt werden. Die Signalwege im Freistrahl sind als durchgezogene Linien mit kurzen danebenstehenden Pfeilen, welche die Signalausbreitungsrichtung kennzeichnen, wiedergegeben.

Fig. 4a zeigt (in Draufsicht) einen Strahlumlenker 22, der einen Strahlteiler 22a (aufgebaut wie der Strahlteiler 12 gemäß dem Stand der Technik) und einen Umlenkspiegel 22b aufweist, welche starr verbunden mit der Laserquelle 11 als Modul 23 waagerecht auf der Verschiebeeinheit 21 eines Verschiebetisches 24 angeordnet sind. Das Ausgangssignal der Laserquelle 11 wird senkrecht zur Verschieberichtung der Verschiebeeinheit 21 emittiert und durch den Strahlteiler 22a aufgeteilt in ein um 90° abgelenktes erstes Signal und ein geradlinig durchgehendes zweites Signal, welches durch den Umlenkspiegel 22b um 90° entgegengesetzt zum ersten Signal abgelenkt wird. Erstes und zweites Signal werden so in dieselbe Richtung (die Verschieberichtung der Verschiebeeinheit 21) gelenkt, jedoch mit entgegengesetztem Richtungssinn. Sie breiten sich somit antiparallel aus und weisen einen durch den Abstand von Strahlteiler 22a und Umlenkspiegel 22b gegebenen Versatz auf. Erstes und zweites Signal werden als Anregesignal zur THz-Emitterantenne bzw. als Abfragesignal zur THz-Detektorantenne geführt, wobei (wie auch bei den folgenden Ausführungsformen) frei wählbar ist, welches der beiden Signale als Anrege- bzw. als Abfragesignal genutzt wird.

Fig. 4b zeigt (in Seitenansicht) einen gleichartig aufgebauten Strahlumlenker 22, der sich von der Anordnung in Fig. 4a lediglich dadurch unterscheidet, dass das Modul 23 senkrecht auf der entsprechend gedrehten Verschiebeeinheit 21 eines Verschiebetisches 24 angeordnet ist.

Fig. 4c zeigt einen polarisationsabhängigen Strahlumlenker 22, der sich von den Anordnungen in Fig. 4a und Fig. 4b dadurch unterscheidet, dass er anstelle des Umlenkspiegels 22b einen Reflexionsspiegel 22c und vor dem Strahlteiler 22a ein λ/2-Plättchen 22d sowie zwischen Strahlteiler 22a und Reflexionsspiegel 22c ein λ/4-Plättchen 22e aufweist. Die beiden aus dem Ausgangssignal einer Laserquelle 11 erzeugten Signale werden ohne Versatz antiparallel in Bewegungsrichtung der Verschiebeeinheit 21 ausgekoppelt und als Anregesignal zur THz-Emitterantenne 14 sowie als Abfragesignal zur THz-Detektorantenne 15 geführt. Selbstverständlich kann das Modul 23, das die Laserquelle 11 und den Strahlumlenker mit den Komponenten 22a, 22c, 22d, 22e umfasst, sowohl senkrecht (wie in Fig. 4c) als auch waagerecht (analog zu Fig. 4a) auf der Verschiebeeinheit 21 eines Verschiebetisches 24 angeordnet sein.

Fig. 4d zeigt eine Variante der Ausführungsformen gemäß Fig. 4a und 4b. Der Strahlumlenker 22 weist auch hier einen Strahlteiler 22a und einen Umlenkspiegel 22b auf. Die Laserquelle 11 ist jedoch um 90° versetzt, sodass das Lasersignal in Bewegungsrichtung der Verschiebeeinheit 21 emittiert wird und unabhängig von deren Position stets auf den gleichen Einkoppelbereich auf einer Seitenfläche des Strahlteilers 22a trifft. Es ist daher nicht notwendig, den die Komponenten 22a, 22b aufweisenden Strahlumlenker 22 und die Laserquelle 11 starr miteinander zu verbinden. Bevorzugt wird die Laserquelle 11 am Rand des Verschiebetisches 24 oder, wie in Fig. 4d dargestellt, außerhalb desselben fixiert. Auf der Verschiebeeinheit 21 verbleiben dabei nur der Strahlumlenker 22 mit den Komponenten 22a und 22b. Ein Modul 23, das die Laserquelle 11 einschließt, ist nicht notwendig. Die Belastung der Verschiebeeinheit 21 wird dadurch verringert, was insb. bei der Verwendung von schweren und massiven Laserquellen 11, z. B. fs-Lasern, von Vorteil ist. Wird eine leichte Laserquelle 11', z. B. eine Laserdiode, verwendet, so kann diese auch an oder auf der Verschiebeeinheit 21 positioniert werden, sodass Laserquelle 11' (punktiert dargestellt) und Strahlteiler 22 ein kompaktes Modul 23 bilden.

Die den Strahlumlenker 22 bildenden Komponenten sind in Fig. 4a, 4b, 4d rechteckig mit einer Strichlinie umrandet. In Fig. 4c wurde aus Gründen der Übersichtlichkeit auf diese Umrandung verzichtet.

Fig. 4e zeigt eine alternative, besonders einfache Ausführungsform des Strahlumlenkers 22, bestehend aus einem rechtwinklig-gleichschenkligen Prisma 22f, das zusammen mit der Laserquelle 11 als Modul 23 auf der Verschiebeeinheit 21 angeordnet ist. Das Ausgangssignal der Laserquelle 11 trifft symmetrisch von außen auf die um 90° versetzten Begrenzungsflächen des Prismas und wird in zwei Signale zerlegt, die antiparallel emittiert und zu den THz-Antennen geführt werden. Selbstverständlich kann anstelle des Prismas auch ein 90° Winkelspiegel eingesetzt werden, der symmetrisch von außen (also auf seiner konvexen Seite) mit dem Ausgangssignal der Laserquelle beaufschlagt wird.

Es ist offensichtlich, dass (analog zu den Ausführungsformen in Fig. 4a und Fig. 4b) auch alle anderen Ausführungsformen so ausführbar sind, dass die Verschiebeeinheit 21 mit den darauf angeordneten Komponenten sowohl waagerecht (parallel) als auch senkrecht zur Oberfläche des Verschiebetisches 24 angeordnet sein kann. Ferner ist offensichtlich, dass auch beliebig gekippte Verschiebeeinheiten 21 realisierbar sind.

Fig. 5a zeigt einen für eine kombinierte Freistrahl- und fasergekoppelte Anordnung vorgesehenen Strahlumlenker 22 und seine Anordnung in einem THz-Spektrometer 20. Der Strahlumlenker 22 umfasst einen Fasersplitter 26, eine als Eingang des Fasersplitters 26 dienende optische Faser 25 und zwei als Ausgänge des Fasersplitters 26 dienende optische Fasern 27a, 27b. Die optischen Fasern 27a, 27b sind mit Auskoppelelementen 28a, 28b verbunden, welche, wie auch der Fasersplitter 26, auf der Verschiebeeinheit 21 eines Verschiebetisches 24 angeordnet sind. Das von einer Laserquelle 11 gelieferte Ausgangssignal wird über eine optische Faser 25 in den Fasersplitter 26 eingekoppelt und dort in zwei identische Signale zerlegt, die mithilfe der beiden optischen Fasern 27a, 27b zu den Auskoppelelementen 28a und 28b geführt werden. Eines dieser Signale wird als Anregesignal vom Auskoppelelement 28a über einen (punktiert dargestellten) Freistrahlabschnitt zu einem Einkoppelelement 30a geführt, in eine optische Faser 31 a eingekoppelt und zu einer THz-Emitterantenne 14 geführt. Das zweite dieser Signale wird als Abfragesignal vom Auskoppelelement 28b ebenfalls in einem Freistrahlabschnitt über eine Kompensationsstrecke 29 zu einem Einkoppelelement 30b geführt, in eine optische Faser 31 b eingekoppelt und zu einer THz-Detektorantenne 15 geführt. Somit wird ein Emitterpfad vom Fasersplitter 26 über die optische Faser 27a, das Auskoppelelement 28a, den zum Einkoppelelement 30a führenden Freistrahlabschnitt und die optische Faser 31 a zur THz-Emitterantenne 14 gebildet. Entsprechend wird ein Detektorpfad vom Fasersplitter 26 über die optische Faser 27b, das Auskoppelelement 28b, den über die Kompensationsstrecke 29 zum Einkoppelelement 30b führenden Freistrahlabschnitt und die optische Faser 31 b zur THz-Detektorantenne 15 gebildet. Es ist sicherzustellen, dass Anrege- und Abfragesignal trotz der Dispersion in den fasergeführten Abschnitten identisch bleiben. Das wird gewährleistet, indem die fasergeführten Abschnitte in beiden Pfaden gleichartig ausgeführt werden: Die optischen Fasern 27a und 27b sowie die optischen Fasern 31 a und 31 b weisen jeweils die gleiche Länge und den gleichen Fasertyp (Material, Durchmesser) auf, sodass Anrege- und Abfragesignal identischen dispersiven Einflüssen unterliegen. Durch die Kompensationsstrecke 29 im Detektorpfad, welche durch zwei Paare von Umlenkspiegeln gebildet werden kann, wird die Einhaltung der Längenkonvention a+c=b gewährleistet. Durch eine Verschiebung der Verschiebeeinheit 21 sind die Längen der Freistrahlabschnitte in Emitter- und Detektorpfad um den gleichen Betrag, jedoch mit entgegengesetztem Vorzeichen änderbar, sodass eine Zeitverzögerung zwischen Anrege- und Abfragesignal durchstimmbar ist. Die Kompensationsstrecke 29 und das Einkoppelelement 30b sind auch außerhalb des Verschiebetisches 24 oder auf einer Verlängerung desselben fest positionierbar, sodass sie den verfügbaren (in Fig. 5a und 5b ebenfalls durch einen gestrichelten Doppelpfeil gekennzeichneten) Verschiebebereich nicht einschränken.

Ein Vorteil dieser Anordnung besteht darin, dass die Laserquelle beliebig positionierbar ist, sowohl als Laserquelle 11 getrennt vom Verschiebetisch 24 als auch verbunden mit dem Verschiebetisch 24, z. B. als auf dessen Unterseite befestigte Laserquelle 11", die über die optische Faser 25" mit dem Fasersplitter 26 verbunden ist. Insbesondere bei Verwendung einer massiven Laserquelle 11 (z. B. eines fs-Lasers) ist deren Anordnung getrennt vom Verschiebetisch 24 zweckmäßig. Die Laserquelle kann aber auch auf der Verschiebeeinheit 21 befestigt und mit dieser bewegt werden, was vor allem bei leichten und kompakten Laserquellen (z. B. Laserdioden) zweckmäßig ist. Eine solche Anordnung mit einer Laserquelle 11"', die über eine optische Faser 25"' mit dem Fasersplitter 26 verbunden ist, ist ebenfalls schematisch in Fig. 5a dargestellt.

Ferner ist es (in einer nicht dargestellten Variante) möglich, auch den Fasersplitter 26 von der Verschiebeeinheit 21 zu entfernen und ihm eine feste Position, vorzugsweise unmittelbar hinter dem Ausgang der Laserquelle 11, zu geben. Auf der Verschiebeeinheit 21 verbleiben dann nur die beiden Auskoppelelemente 28a, 28b, die über hinreichend verlängerte optische Fasern 27a und 27b mit dem Fasersplitter 26 verbunden sind. Verschiebetisch 24 und Verschiebeeinheit 21 sind in diesem Fall sehr kompakt und schmal ausführbar.

Fig. 5b zeigt eine noch weiter vereinfachte Anordnung, bei der der Emitterpfad vollständig als vom Fasersplitter 26 zur THz-Emitterantenne 14 verlaufende optische Faser 27a, 31 a ausgeführt und somit in seiner Länge nicht veränderbar ist. (Die in der Anordnung gemäß Fig. 5a vorhandenen optischen Fasern 27a und 31 a werden hier also als eine einzige optische Faser ausgeführt, die deshalb in Fig. 5b mit dem doppelten Bezugszeichen 27a, 31 a bezeichnet wird.) Lediglich der Detektorpfad enthält einen durch das Auskoppelelement 28b und das Einkoppelelement 30b begrenzten Freistrahlabschnitt mit einer Kompensationsstrecke 29, die wegen des fehlenden Freistrahlabschnitts im Emitterpfad wesentlich kürzer als in der Ausführungsform gemäß Fig. 5a ist. Es ist sogar möglich, vollständig auf die Kompensationsstrecke zu verzichten, wenn die durch den Abstand der THz-Antennen 14, 15 gegebene Länge c des THz-Pfades auf den Abstand zwischen dem Auskoppelelement 28b und dem Einkoppelelement 30b verkürzt wird. Die oben bezüglich Fig. 5a beschriebenen Varianten, insb. die verschiedenen Positionen 11, 11", 11"' der Laserquelle, sind hier ebenfalls nutzbar. Ebenso kann der Fasersplitter 26 von der Verschiebeeinheit 21 entfernt und an einem anderen Ort positioniert werden, sodass die Verschiebeeinheit 21 nur noch mit dem Auskoppelelement 28b bestückt ist, was einen noch kompakteren Aufbau erlaubt. Da sich eine Verschiebung der Verschiebeeinheit 21 nur auf einen Pfad (den Detektorpfad) auswirkt, kann im Vergleich zu den vorab beschriebenen Ausführungsformen nur die halbe zeitliche Verzögerung zwischen Abfrage- und Anregesignal erzielt werden, was aber für bestimmte Messaufgaben, z. B. wenn eine hohe zeitliche Auflösung gewünscht ist, sogar von Vorteil ist.

Um sicherzustellen, dass Anrege- und Abfragesignal identischen dispersiven Einflüssen unterliegen, weisen auch hier die beiden optischen Fasern 27b und 31 b im Detektorpfad die gleiche Gesamtlänge und den gleichen Fasertyp wie die optische Faser 27a, 31 a im Emitterpfad auf.

Die den Strahlumlenker 22 bildenden Komponenten sind in Fig. 5a rechteckig mit einer Strichlinie umrandet, wobei die zum Strahlumlenker 22 gehörenden optischen Fasern 25 (alternativ 25" oder 25"') sowie 27a und 27b nur teilweise erfasst sind. In Fig. 5b wurde aus Gründen der Übersichtlichkeit auf diese Umrandung verzichtet.

Es sei darauf hingewiesen, dass es sich bei der Kompensationsstrecke 29 nicht um eine konventionelle (durchstimmbare) Verzögerungsstrecke (vgl. Fig. 1, Komponenten 16, 17) handelt, denn der Abstand der beiden Spiegelpaare wird auf einen festen Wert eingestellt und dann nicht mehr verändert.

### Funktionsweise des THz-Spektrometers und Verfahren zur Messung von THz-Signalen damit

Das erfindungsgemäße THz-Spektrometer 20 weist folgende Funktionsweise auf:

Die Laserquelle 11 emittiert ein Ausgangssignal, das im Freistrahl oder über eine optische Faser 25 in den Strahlumlenker 22 eingekoppelt wird. Der Strahlumlenker 22 teilt das Ausgangssignal der Laserquelle 11 in ein Anrege- und ein Abfragesignal auf und lenkt diese beiden Signale auf zwei Pfade gleicher Richtung mit entgegengesetztem Richtungssinn (Emitterpfad und Detektorpfad, welche über entsprechend positionierte Umlenkspiegel zu einer THz-Emitterantenne 14 und einer THz-Detektorantenne 15 führen). Das Anregesignal wird auf dem Emitterpfad zur THz-Emitterantenne 14, das Abfragesignal auf dem Detektorpfad zur THz-Detektorantenne 15 geführt. Beide Signale sind identisch, wobei identisch hier bedeutet, dass sich Anregesignal und Abfragesignal nur um einen konstanten Faktor (also in der Amplitude) unterscheiden, die in den Signalen enthaltenen Frequenzen und deren Phasendifferenzen aber gleich sind. Der konstante Faktor kann auch 1 sein. Konkrete Ausführungsformen des Strahlumlenkers 22, die die gewünschte Aufteilung und Umlenkung gewährleisten, wurden oben beschrieben.

Eine definierte Verschiebung der Verschiebeeinheit 21 mit dem Strahlumlenker 22 auf dem Verschiebetisch 24, die parallel zur Richtung von Emitter- und Detektorpfad erfolgt, bewirkt eine Verlängerung eines dieser Pfade und eine betragsmäßig gleiche Verkürzung des anderen Pfades. Dadurch wird eine definierte Differenz der Pfadlängen eingestellt, wobei die Summe der Pfadlängen konstant bleibt. Aus der eingestellten Differenz der Pfadlängen resultiert eine dazu proportionale Differenz der Laufzeiten von Abfrage- und Anregesignal. Somit wird durch die Verschiebung des Strahlumlenkers 22 auf dem Verschiebetisch 24 mit einer gewählten (konstanten oder variablen) Schrittweite eine definierte zeitliche Verzögerung zwischen Abfrage- und Anregesignal eingestellt. Indem diese zeitliche Verzögerung in einem gewünschten Zeitbereich mit einer gewählten Schrittweite durchgestimmt wird, wird ein durch das Anregesignal an einer THz-Emitterantenne 14 ausgelöstes periodisches THz-Signal an einer mit dem identischen zeitverzögerten Abfragesignal beaufschlagten THz-Detektorantenne 15 in kohärenter Detektion im Sampling-Verfahren punktweise gemessen.

Die Pfadlängen a, b, c sind so gewählt, dass die Längenkonvention a+c=b exakt erfüllt ist, wenn sich der Strahlumlenker 22 bzw. das Modul 23 in der Nullstellung P₀ befinden (vgl. Fig. 2a). Der auf dem Verschiebetisch 24 zu durchfahrende laterale Verschiebebereich liegt somit in der Umgebung von P₀. Der messbare Zeitbereich, gegeben durch das einstellbare Intervall der Zeitverzögerung, sollte, falls das erfindungsgemäße THz-Spektrometer als QTDS-Spektrometer eingesetzt wird, mehrere Periodendauern T des von einer MMLD (als optimaler Laserquelle für QTDS) gelieferten periodischen Signals (typische Periodendauer T = 1/Δf = 40 ps) umfassen. Bevorzugt sind 10 bis 15 Perioden, also ein zu messender Zeitbereich von 400 ps bis 600 ps. Bei der Verwendung als THz-TDS-Spektrometer reicht ein kürzerer Zeitbereich, der der auswertbaren Länge eines THz-Pulses (ca. 100 ps) entspricht, aus.

Das Zusammenwirken aller Komponenten des THz-Spektrometers wird durch eine Steuer-, Mess- und Auswerteelektronik (SMA) gewährleistet. Die SMA versorgt die THz-Emitterantenne 14 mit einer Bias-Spannung, steuert die Verschiebung der Verschiebeeinheit 21 auf dem Verschiebetisch 24, misst mithilfe eines empfindlichen Amperemeters das momentane THz-Feld am Ort der THz-Detektorantenne 15 und realisiert mithilfe aus der THz-TDS-Spektroskopie bekannter Algorithmen die Datenauswertung.

Zur Messung eines durch ein Anregesignal ausgelösten periodischen THz-Signals in einem vorgegebenen Zeitbereich durch ein identisches Abfragesignal wird eine Differenz der Pfadlängen von Detektorpfad und Emitterpfad eingestellt und in einem durch die Grenzen des Zeitbereichs bestimmten Intervall durchgestimmt. Dieser Ablauf wird nachfolgend unter Bezugnahme auf Fig. 2a beschrieben.

Fig. 2a zeigt die Verschiebeeinheit 21 mit dem Strahlumlenker 22 (der mit der Laserquelle 11 ein Modul 23 bildet) in einer Position P₀, in der die Längenkonvention a+c=b exakt erfüllt ist. Somit wird in Position P₀ das momentane THz-Feld im Hauptmaximum des THz-Signals an der THz-Detektorantenne 15 registriert. Eine Verschiebung der Verschiebeeinheit 21 mit dem Strahlumlenker 22 um die Länge Δx zur Position P₁ bewirkt eine Verlängerung des Detektorpfads um Δx und eine betragsmäßig gleiche Verkürzung des Emitterpfads um Δx. Zwischen Detektorpfad b und Emitterpfad+THz-Pfad a+c entsteht so eine Pfadlängendifferenz von 2Δx (d.h. b>a+c), wodurch das Abfragesignal gegenüber dem Anregesignal um Δt₁= 2Δx/c verzögert wird (wobei c die Lichtgeschwindigkeit ist). Durch schrittweise Steigerung der Pfadlängendifferenz (in äquidistanten oder nichtäquidistanten Schritten, Positionen P₂,...) ist es so möglich, ein THz-Signal im Zeitbereich punktweise abzutasten. In Position P₂ wird (bei äquidistanter Schrittweite Δx) eine Verzögerung Δt₂= 4Δx/c erreicht. Die Pfadlängendifferenz wird vergrößert, bis eine vorgegebene Endposition P_{End} erreicht ist, bei der eine maximale Verschiebung Δxₘₐₓ vorliegt, der eine maximale zeitliche Verzögerung des Abfragesignals gegenüber dem Anregesignal Δtₘₐₓ= 2Δxₘₐₓ/c entspricht.

Der Verschiebetisch 24 wird so positioniert, dass die Position P₀ im Inneren des verfügbaren Verschiebebereichs liegt, sodass auch negative Pfadlängendifferenzen (b<a+c) einstellbar sind.

Zum Messen eines zeitlich ausgedehnten THz-Signals im Sampling-Verfahren wird eine Anfangsposition P_{Anf} mit einer (ggf. negativen) Pfadlängendifferenz Δxₘᵢₙ gewählt und der Strahlumlenker 22 (bzw. das Modul 23) mithilfe der Verschiebeeinheit 21 von dieser Anfangsposition P_{Anf} mit definierter, ggf. variabler, Schrittweite über die Position P₀ bis zur Endposition P_{End} durchfahren wird, wobei die Pfadlängendifferenz vom negativen Anfangswert Δxₘᵢₙ über den Wert 0 zu einem Endwert Δxₘₐₓ läuft. Entsprechend durchläuft die den messbaren Zeitbereich bestimmende zeitliche Verzögerung ein Intervall <Δtₘᵢₙ, Δtₘₐₓ> mit dem Anfangswert Δtₘᵢₙ= 2Δxₘₐₓ/c, dem Endwert Δtₘₐₓ=2Δxₘₐₓ/c und den Messpunkten Δtᵢ=2Δxᵢ/c. Δtₘᵢₙ, ..., Δt₁, Δt₂, ..., Δtₘₐₓ markieren somit diskrete Messpunkte im Zeitbereich, zu denen das momentane THz-Feld gemessen wird. (Diese Betrachtungen gelten für alle oben beschriebenen Anordnungen mit Ausnahme der Anordnung in Fig. 5b. Bei dieser Anordnung sind die angegebenen zeitlichen Verzögerungen und Zeitbereiche zu halbieren.)

Die Pfadlängendifferenz kann über einen mehrere Zentimeter breiten Bereich, vorzugsweise 5 cm bis 10 cm, durchgestimmt werden, woraus ein messbarer Zeitbereich von mehreren 100 ps (z. B. 330 ps bei einer Pfadlängendifferenz von 5 cm) resultiert. Somit können bei der Verwendung als THz-QTDS-Spektrometer mehrere Perioden einer THz-Quasipulsfolge (mit der typischen Periodendauer T=40 ps) registriert werden.

Das Messregime kann in vielerlei Hinsicht variiert werden. Es ist z. B. möglich, zunächst Anfangspunkt Δtₘᵢₙ und Endpunkt Δtₘₐₓ des Zeitbereichs sowie die Schrittweiten zwischen den Messpunkten Δtₘᵢₙ, ..., Δt₁, Δt₂, ..., Δtₘₐₓ zu wählen und daraus die zugehörigen Ortspositionen Δxₘᵢₙ, ..., Δx₁, Δx₂, ..., Δxₘₐₓ zu bestimmen. Es können eine konstante Schrittweite Δt oder aber mehrere verschiedene Schrittweiten gewählt werden. Die Verschieberichtung kann umgekehrt werden, sodass der Zeitbereich in entgegengesetzter Richtung durchfahren wird. Die Messzeit je Messpunkt kann variiert werden. Beliebig viele Messungen können aufeinanderfolgend durchgeführt und kumuliert werden.

Zur Gewinnung des THz-Spektrums einer Probe wird mit dem beschriebenen Verfahren zunächst eine THz-Referenzmessung ohne Probe durchgeführt und das registrierte THz-Referenzsignal in der Steuer-, Mess- und Auswerteelektronik gespeichert. Dann wird die zu untersuchende Probe im THz-Pfad platziert und eine THz-Messung mit denselben Messparametern (Messintervall, Schrittweiten u. a.) durchgeführt und das registrierte THz-Messsignal, das durch Wechselwirkung mit der Probe Informationen über dieselbe aufgenommen hat, in der Steuer-, Mess- und Auswerteelektronik gespeichert und mit dem THz-Referenzsignal verglichen. THz-Referenzsignal und THz-Messsignal können dann mithilfe bekannter THz-TDS-Algorithmen im Zeitbereich und/oder im Frequenzbereich weiterverarbeitet werden.

### Bevorzugte Ausführung des erfindungsgemäßen THz-Spektrometers als THz-Quasizeitbereichsspektrometer (THz-QTDS)

Das erfindungsgemäße THz-Spektrometer 20 ist besonders kompakt und kostengünstig zu gestalten, wenn es als THz-Quasizeitbereichsspektrometer (THz-QTDS) ausgeführt wird, bei dem als Laserquelle 11 eine Multimode-Laserdiode (MMLD), die eine Vielzahl von Lasermoden mit äquidistanten Frequenzabständen Δf erzeugt, verwendet wird. Eine MMLD ist ein optoelektronisches Standardbauteil, das im Vergleich zu einem fs-Laser zu einem Bruchteil der Kosten erhältlich ist und eine weitaus kleinere Abmessung und Masse aufweist.

Das THz-QTDS kann mit allen vorangehend beschriebenen Ausführungsformen des Strahlumlenkers ausgestattet werden und somit sowohl eine Strahlführung ausschließlich im Freistrahl als auch eine Strahlführung kombiniert im Freistrahl und fasergekoppelt aufweisen.

Bei einer Strahlführung ausschließlich im Freistrahl wird die als MMLD ausgeführte Laserquelle 11 zusammen mit dem Strahlumlenker 22 als kompaktes Modul 23 auf der Verschiebeeinheit 21 eines Verschiebetisches 24, der bevorzugt als Lineartisch ausgeführt ist, platziert. Laserquelle 11 und Strahlumlenker 22 sind dabei relativ zueinander so angeordnet, dass das Ausgangssignal der Laserquelle im Freistrahl in den Strahlumlenker 22 eingekoppelt wird (vgl. Fig. 4a-c, e). Die als MMLD ausgeführte Laserquelle 11 und der Strahlumlenker 22 belasten den Verschiebetisch 24 nur mit einem geringen Gewicht, sodass dieser leicht und kostengünstig ausführbar ist und das kompakte Modul 23 aufgrund seiner geringen Masse mit hohen Beschleunigungen verschiebbar ist. Ebenso verwendbar ist die Anordnung gemäß Fig. 4d, wobei sich die als MMLD ausgeführte Laserquelle sowohl in der Position 11' (mit der Verschiebeeinheit 21 verbunden, somit starr gegenüber dem Strahlumlenker positioniert) als auch in der Position 11 (fixiert außerhalb des Verschiebetisches 24) oder in einer Position verbunden mit dem Verschiebetisch 24 befinden kann.

Bei einer Strahlführung, die Abschnitte im Freistrahl und fasergekoppelte Abschnitte kombiniert, sind die oben beschriebenen Ausführungsformen, dargestellt in Fig. 5a und Fig. 5b, einsetzbar, bei denen der Strahlumlenker 22 als Fasersplitter 26 ausgeführt ist.

Bevorzugt ist die Ausführungsform gemäß Fig. 5a, bei der die vom Fasersplitter 26, der sich auf der Verschiebeeinheit eines Verschiebetisches befindet, aus einem Ausgangssignal erzeugten identischen Signale über die Fasern 27a und 27b zu zwei auf der Verschiebeeinheit 21 des Verschiebetisches 24 angeordneten Auskoppelelementen 28a und 28b führbar und antiparallel als Anregesignal bzw. Abfragesignal in zwei Freistrahlabschnitte, die Teil des Emitterpfades bzw. Teil des Detektorpfades sind, auskoppelbar sind. Durch Verschieben der Verschiebeeinheit (um Δx in Richtung des Emitterpfads) sind die Längen von Detektor- und Emitterpfad gleichzeitig entgegengesetzt zueinander änderbar, wobei eine Verlängerung des einen Pfades um Δx zu einer betragsmäßig gleichen Verkürzung des anderen Pfades führt, sodass sich eine Pfadlängendifferenz mit dem Betrag 2Δx ergibt. Daraus resultiert eine Zeitverzögerung des Abfragesignals gegenüber dem Anregesignal um Δt=2Δx/c, die über einen von der Geometrie und der Positionierung des Verschiebetisches 24 abhängigen Bereich durchstimmbar ist. Bevorzugt wird die als MMLD ausgeführte Laserquelle 11"' ebenfalls mitführbar auf der Verschiebeeinheit 21 angeordnet. Sie kann aber auch als Laserquelle 11 außerhalb des Verschiebetisches 24 (mechanisch getrennt von diesem) oder als Laserquelle 11" mechanisch verbunden mit dem Verschiebetisch 24 angeordnet sein.

Die mechanische Trennung der Laserquelle 11 vom Verschiebetisch 24, die bei Verwendung eines fs-Lasers mit sehr viel größerer Masse sinnvoll ist, bringt bei der Verwendung einer MMLD als Laserquelle jedoch keinen Vorteil. In jeder Variante ist die Laserquelle 11, 11", 11"' über eine optische Faser 25, 25" oder 25"' mit dem Fasersplitter 26 verbunden.

Ebenso besteht die Möglichkeit, auch den Fasersplitter 26 außerhalb der Verschiebeeinheit 21 anzuordnen und lediglich die beiden mit ihm über hinreichend verlängerte optische Fasern 27a, 27b verbundenen Auskoppelelemente 28a, 28b auf der Verschiebeeinheit 21 zu belassen.

In einer besonderen Ausführungsform verbleibt sogar nur das Auskoppelelement 28b auf der Verschiebeeinheit, während die optische Faser 27a direkt mit der THz-Emitterantenne 14 verbunden wird. In diesem Fall bewirkt die Verschiebung der Verschiebeeinheit lediglich eine Längenänderung eines Freistrahlabschnitts im Detektorpfad, sodass sich bei einer Verschiebung der Verschiebeeinheit um Δx eine (gegenüber den anderen Varianten um die Hälfte geringere) Zeitverzögerung des Abfragesignals gegenüber dem Anregesignal um Δt=Δx/c ergibt.

Die Funktionsweise des erfindungsgemäßen THz-Quasizeitbereichsspektrometers entspricht der oben gegebenen Darstellung, wobei aber die Besonderheiten des von der MMLD gelieferten Ausgangssignals zu beachten sind.

Dieses Ausgangssignal setzt sich aus einer Vielzahl von Lasermoden mit äquidistanten Frequenzabständen Δf (Modenabstand) zusammen, das durch den Strahlumlenker 22 in identische Anrege- und Abfragesignale aufgeteilt wird, welche über den Emitterpfad bzw. Detektorpfad zur THz-Emitterantenne 14 und zur THz-Detektorantenne 15 geführt werden, sodass diese Antennen mit identischen Signalen moduliert werden. An der mit einer Bias-Spannung beaufschlagten THz-Emitterantenne 14 wird durch das Anregesignal ein THz-Signal ausgelöst, welches an der THz-Detektorantenne 15 mittels eines Amperemeters gemessen wird, indem diese durch das identische Abfragesignal moduliert wird.

Durch die definierte Verschiebung der Verschiebeeinheit 21 mit dem verschiedenartig ausgeführten Strahlumlenker 22 oder mindestens einem Auskoppelelement 28b, bevorzugt aber zwei Auskoppelelementen 28b,28a, wird eine definierte Verzögerungszeit zwischen Anrege- und Abfragesignal schrittweise über einen ausgewählten Zeitbereich durchgestimmt, wodurch ein Messpunkt mit definierter Schrittweite über ein zu messendes periodisches THz-Signal hinweggeführt und somit des gesamte THz-Signal punktweise abgerastert und seine Wellenform (Amplitude und Phase) gemessen wird und mithilfe bekannter THz-TDS-Algorithmen ausgewertet werden kann.

Die in der Beschreibung und in den Abbildungen dargestellten Ausführungsformen des erfindungsgemäßen Spektrometers und seiner Komponenten sind nicht als abschließend zu betrachten. Sie können vielfältig kombiniert und erweitert werden. Ferner ist die Verwendung des erfindungsgemäßen THz-Spektrometers nicht auf den Einsatz als THz-Quasizeitbereichsspektrometer (THz-QTDS) beschränkt. Vielmehr ist es auch als THz-Zeitbereichsspektrometer (THz-TDS) verwendbar, wobei als Laserquelle (11) ein fs-Laser zum Einsatz kommt. Zudem ist es als THz-CW-Spektrometer verwendbar, wobei als Laserquelle (11) zwei Laserdioden einsetzbar sind, die kontinuierliche Signale bei zwei Frequenzen f₁, f₂, die durchstimmbar sein können, emittieren, wobei die Differenzfrequenz |f₁-f₂| im THz-Bereich liegt. Alternativ ist eine aus zwei gleichartigen Single-Mode-Laserdioden, vorzugsweise DFB-Laserdioden, bestehende Laserquelle einsetzbar, deren Frequenzen thermisch oder elektronisch durchstimmbar sein können. Es können auch drei oder mehr Laserdioden, die unterschiedliche Frequenzen emittieren, kombiniert werden, sodass eine größere Anzahl von Differenzfrequenzen gebildet und ein größerer spektraler Bereich abgedeckt werden kann.

### Selbstreferenzierungsverfahren

Das erfindungsgemäße THz-Spektrometer kann ohne zusätzliche Maßnahmen in der oben beschriebenen Weise eingesetzt werden, wenn der Verschiebetisch 24 auf der Basis einer konventionellen Verzögerungsstrecke ausgeführt wird, was durch eine einfache Umrüstung einer solchen möglich ist: Das Paar von Umlenkspiegeln 17 wird durch den Strahlumlenker 22 bzw. durch das Modul 23 ersetzt. Bei diesen für THz-Spektrometer optimierten Verzögerungsstrecken ist die Beziehung zwischen Verzögerungszeit und Ortsposition bekannt, systematische und zufällige Fehler sind minimiert, sodass eine quantitative Auswertung gemessener THz-Spektren mithilfe der SMA problemlos möglich ist. Da konventionelle Verzögerungsstrecken sehr aufwendig und teuer sind, löst ihre Verwendung jedoch nicht die Aufgabe der Erfindung, ein kompaktes und kostengünstiges THz-Spektrometer bereitzustellen.

Wie oben dargestellt, wird die Aufgabe der Erfindung gelöst, indem das erfindungsgemäße THz-Spektrometer mit einem Verschiebetisch ausgestattet wird, der eine aus einem optischen Laufwerk entnommene Verschiebeeinheit aufweist. Solche Verschiebeeinheiten, die bereits eine integrierte Laserdiode aufweisen, sind zu Kosten in der Größenordnung von 20 € erhältlich. Andere kommerziell verfügbare Standardprodukte, z. B. Verschiebeeinheiten aus Werkzeugmaschinen oder Tintenstrahldruckern, sind ebenfalls verwendbar.

Bei einer solchen Verschiebeeinheit ist die Beziehung zwischen Verzögerungszeit und Ortsposition nicht unmittelbar bekannt. Ihre genaue Kenntnis ist Voraussetzung für den Einsatz als THz-Spektrometer. Ferner ist auch die vorhandene Laserdiode im Allgemeinen nicht für die THz-Spektroskopie geeignet. Vor dem Einsatz für Routinemessungen muss die Verschiebeeinheit somit modifiziert und charakterisiert werden. Dazu sind folgende Maßnahmen zu realisieren:

Zunächst wird die in der Verschiebeeinheit vorhandene Laserdiode durch eine Laserdiode mit den benötigten Eigenschaften und einen Strahlumlenker ersetzt. Bevorzugt wird eine MMLD gewählt, die ein Ausgangssignal mit im Frequenzbereich äquidistant beabstandeten Moden liefert, das optimal für die THz-QTDS geeignet ist. Diese Moden ermöglichen die Erzeugung und Detektion eines THz-QTDS-Signals mit sich periodisch wiederholendenTHz-Quasipulsen. Der zeitliche Abstand T der THz-Quasipulse ergibt sich aus dem Reziproken des Modenabstands Δf: T=1/Δf. Im günstigsten Fall ist in der gewählten Verschiebeeinheit bereits eine geeignete MMLD integriert, sodass ihre Ersetzung nicht nötig ist.

Der Modenabstand Δf wird durch die Geometrie des Resonators der MMLD bestimmt und ist i. Allg. aus dem Datenblatt der MMLD bekannt. Fehlt diese Angabe oder ist sie unzuverlässig, so wird der Modenabstand experimentell bestimmt, indem die MMLD, vorzugsweise verbunden mit der Verschiebeeinheit, als (feststehende) Laserquelle in ein konventionelles THz-TDS-Spektrometer eingesetzt und eine THz-TDS-Messung über einen langen Zeitbereich, der mehrere Periodendauern T, vorzugsweise 5 bis 10 Periodendauern, umfasst, durchgeführt wird. Aus dem Messergebnis im Zeitbereich ist die Periodendauer T direkt ablesbar. Das Messergebnis im Zeitbereich kann durch eine FourierTransformation, bevorzugt eine Fast Fourier Transform, in den Frequenzbereich transformiert werden. Aus dem resultierenden Spektrum der MMLD ist der Modenabstand Δf direkt ablesbar.

Die Verschiebeeinheit mit der so charakterisierten MMLD wird in das erfindungsgemäße Spektrometer eingesetzt. Es wird eine THz-QTDS-Messung durchgeführt, wobei die Verschiebeeinheit über den gesamten verfügbaren Verschiebebereich verschoben und somit der maximal verfügbare Zeitbereich registriert wird.

Dabei wird das Ausgangssignal der MMLD durch den Strahlumlenker in ein Anrege- und Abfragesignal zerlegt, welche auf die THz-Antennen geführt werden. Die THz-Emitterantenne wird durch das Anregesignal zur Emission einer THz-Quasipulsfolge mit identischen äquidistanten THz-Quasipulsen angeregt. Diese THz-Pulsfolge wird, indem der Strahlumlenker 22 (bzw. das Modul 23) über einen entsprechenden (vorher abgeschätzten) Bereich lateral verschoben wird, durch das identische Abfragesignal, das mit zeitlich durchgestimmter Verzögerung auf die THz-Detektorantenne geführt wird, über einen mehrere Perioden umfassenden Zeitbereich abgetastet. Beispielsweise kann ein Zeitbereich von 600 ps registriert werden, der, wenn eine MMLD mit Δf=25 GHz gewählt wird, N=15 Perioden umfasst.

Somit sind in einem solchen Zeitbereich N=15 THz-Pulse enthalten, deren zeitlicher Abstand bekannt ist. Diese äquidistant beabstandeten Pulse werden verwendet, um die gewünschte Beziehung zwischen Beziehung zwischen Verzögerungszeit und Ortsposition zu ermitteln. Dazu wird ein geeignetes Merkmal der Pulsform ausgewählt und für jeden der 15 Pulse die jeweilige Ortsposition der Verzögerungseinheit gemessen, bei der das Merkmal auftritt. Geeignete Merkmale sind das Pulsmaximum, der Punkt des steilsten Anstiegs oder Abfalls des Pulses (Wendepunkte) oder auch Merkmale, z. B. die Maxima, in den Auslaufschwingungen des Pulses. Die Ortspositionen des gewählten Merkmals, die im Allgemeinen nicht äquidistant sind, werden äquidistant (mit der Zeitdifferenz T) beabstandeten Punkten im Zeitbereich zugeordnet. Somit werden Stützstellen gewonnen, die die Beziehung zwischen einer linearen Zeitachse, die die Verzögerungszeit wiedergibt, und einer die Position der Verzögerungseineheit abbildenden Ortsachse, deren Skalierung vorab unbekannt war, gewonnen. Mithilfe dieser Stützstellen wird durch Interpolation die vollständige Beziehung zwischen Verzögerungszeit und Ortsposition bestimmt. Selbstverständlich können mehrere Merkmale in Kombination genutzt werden. Werden bspw. Maximum und Wendepunkte des Pulses kombiniert, so resultieren (in äquidistanten Abständen T) Gruppen mit jeweils 3 Punkten, die zur Bildung von Stützstellen geeignet sind, sodass die Anzahl der Stützstellen lokal erhöht wird. Da diese Gruppen im Zeitbereich identisch sind, lassen sich Nichtlinearitäten der Ortsachse (erkennbar als Stauchung oder Streckung der Gruppen relativ zueinander) unmittelbar feststellen. Um alle Merkmale der Gruppe quantitativ als Stützstellen verwenden zu können, muss die Pulsform vorab mit einer unabhängigen Messung analysiert werden, um die zeitlichen Abstände der Pulsmerkmale (im gewählten Beispiel die Abstände der Wendepunkte vom Maximum) absolut zu bestimmen.

Aufgrund der Periodizität der Pulsfolge ist die Zeitachse zunächst eine relative Zeitachse, deren Nullpunkt frei gewählt werden kann. Beispielsweise kann das Maximum eines willkürlich ausgewählten Pulses als Nullpunkt festgelegt werden. Um diesen Nullpunkt auch bei einer unbeabsichtigten Verstellung der Verschiebeeinheit sicher reproduzieren zu können, sollte eine absolute Zeitachse konstruiert werden. Dazu wird die Verschiebeeinheit mit mindestens einem Endschalter ausgestattet. Ausgehend von diesem Endschalter wird der gewünschte Zeitbereich abgetastet, wobei die registrierten Pulse eine eindeutige laufende Nummerierung erhalten. Somit kann ein zur Festlegung des Nullpunktes gewählter Puls jederzeit wiedergefunden werden. Der Endschalter kann am Anfang oder am Ende des Verschiebebereiches des Strahlumlenkers positioniert werden.

Ein mit dem QTDS-Verfahren über mehrere Perioden im Zeitbereich gemessenes quasiperiodisches THz-Signal zeichnet sich durch einen eindeutigen Amplitudengang aus. In der Periode, in deren Bereich die Längenkonvention a+c=b den Wert null durchläuft, weist das THz-Signal die höchste Amplitude auf. Ein Merkmal in dieser Periode, z. B. das Maximum des Hauptpeaks, sollte als Nullpunkt der Zeitachse gewählt werden. Der Nullpunkt der Zeitachse kann somit zum einen mithilfe einer von einem Endschalter aus gemessenen Schrittmotorposition, zum anderen mithilfe des Amplitudengangs des THz-QTDS-Signals reproduziert werden.

Bevorzugt wird sowohl am Anfang als auch am Ende des Verschiebebereiches ein Endschalter positioniert. Damit ist es möglich, die Gesamtzahl der Pulse im Verschiebebereich zu zählen und Störungen der Aufbaus, die sich in einer Änderung dieser Gesamtzahl widerspiegeln, nachzuweisen.

Um eine hohe Genauigkeit bei der Bestimmung der Beziehung zwischen Verzögerungszeit und Ortsposition zu erreichen, sollten die Stützstellen im Zeitbereich möglichst eng liegen. In einer Periode T, die dem Messbereich eines THz-Pulses entspricht, sollten mehrere äquidistante Stützstellen vorhanden sein.

Die zur Rekonstruktion der Zeitachse genutzte MMLD kann auch außerhalb der Verschiebeeinheit platziert und ihr Signal fasergekoppelt in den Strahlumlenker auf der Verschiebeeinheit eingekoppelt werden.

Dieses erfindungsgemäße Verfahren, das die bekannten Eigenschaften des Ausgangssignals einer Laserquelle (MMLD) zur Ermittlung der funktionellen Abhängigkeit der Zeitverzögerung von der Ortsposition der Verschiebeeinheit ausnutzt, wird als Selbstreferenzierung bezeichnet.

### Ausführungsbeispiel zum Selbstreferenzierungsverfahren

Das Verfahren der Selbstreferenzierung wird in den nachfolgend beschriebenen Schritten durchgeführt:

### Schritt 0 (ggf. optional): Charakterisierung der Laserquelle

Dieser Schritt ist nur erforderlich, wenn die Abstrahlparameter der als Laserquelle verwendeten MMLD nicht hinreichend bekannt sind (z. B. unzureichende Herstellerangaben), sodass sie vor der Verwendung in einem THz-QTDS-Aufbau verifiziert werden müssen. Er umfasst den Nachweis, dass am Ort der Detektorantenne eine periodische Pulsfolge messbar ist, und die genaue Messung ihrer Periodendauer T.

Dazu wird die MMLD (oder die aus dem Laufwerk entnommene Verschiebeeinheit mit integrierter MMLD) als unbewegliche Laserquelle in ein konventionelles THz-TDS-System 10 mit einer Verzögerungsstrecke 16 gemäß Fig. 1 eingesetzt. Es wird eine THz-TDS-Messung in einem großen Zeitbereich, der sich von einem Startwert mit negativer Zeitverzögerung über mehrere Perioden T zu einem Endwert mit positiver Zeitverzögerung erstreckt. Der Zeitbereich wird durch Verschieben des Spiegelpaars 17 der Verzögerungsstrecke durchfahren (ohne die MMLD zu bewegen). Die Beziehung zwischen Verzögerungszeit und Ortsposition der Spiegel auf der Verzögerungsstrecke ist bekannt, sodass das Signal unmittelbar als Funktion der Verzögerungszeit registriert wird.

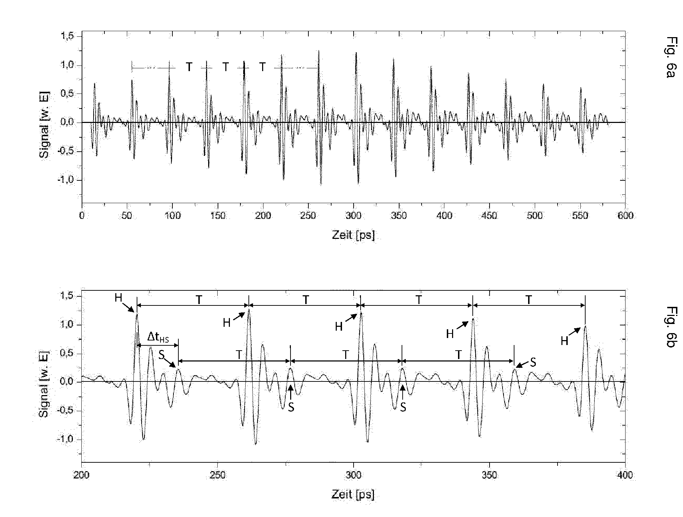

Fig. 6a zeigt das Ergebnis einer solchen Messung des an der Detektorantenne messbaren, von der MMLD erzeugten Signals (*Intensität* in willkürlichen Einheiten=w.E als Funktion der Zeit in ps). Es wird ein periodisches Signal gemessen, dessen Periodendauer T über den gemessenen Zeitbereich, der 14 Perioden umfasst, konstant bleibt (T=41 ps). Die Signalform (messbar z. B. durch das Höhenverhältnis des Hauptpeaks zu den Nebenmaxima) bleibt über alle Perioden hinweg sehr gut konstant. Somit wird bestätigt, dass die MMLD die erforderlichen äquidistanten (longitudinalen) Moden mit einem Modenabstand Δf=1/T=24,4 GHz liefert und Störeinflüsse (z. B. Signalverzerrungen durch unerwünschte transversale Moden) vernachlässigbar sind. Ferner wird beobachtet, dass die Amplitude der Pulse im gemessenen Zeitbereich zunächst ansteigt, bei einem eindeutig zu identifizierenden Puls ein Maximum erreicht, um dann wieder abzufallen. Bei dem Puls mit maximaler Amplitude ist die *Längenkonvention* a+c=b exakt erfüllt. Im Hauptmaximum dieses Pulses erreicht die Zeitverzögerung den Wert null, d. h. das vom Anregesignal an der THz-Emitterantenne ausgelöste THz-Signal erreicht zeitgleich mit dem (zum Anregesignal identischen) Abfragesignal die THz-Detektorantenne, sodass mit demselben *Signal*/*Puls* angeregt und detektiert wird. Beidseitig von diesem Puls wachsen (absolute) Zeitverzögerung und Laufzeitdifferenz an, was zu einem Abfall der Signalamplitude führt.

Das gemessene Signal bestätigt somit, dass die MMLD für das Verfahren der Selbstreferenzierung und für QTDS-Messungen geeignet ist: Am Ort der Detektorantenne ist eine periodische Pulsfolge mit einer Periodendauer von T=41 ps messbar. Es existiert ein ausgezeichneter Puls, bei dem die Signalamplitude ein Maximum erreicht, sodass, ausgehend von diesem Puls, ein Nullpunkt im Zeitbereich (z. B. Lage des Hauptpeaks dieses Pulses) festgelegt werden kann.

Die Folge der äquidistanten Hauptpeaks der Pulse (Merkmal H) eignet sich zur Gewinnung von Stützstellen im Zeitbereich, die im nachfolgenden Schritt einer Ortskoordinate zugeordnet werden. Weitere Merkmale, z. B. Nebenmaxima, die in den gleichen äquidistanten Abständen von 41 ps auftreten, können ebenfalls zur Gewinnung von Stützstellen genutzt werden, um deren Dichte zu erhöhen. Z. B. kann, wie in Fig. 6b (vergrößerter Ausschnitt von Fig. 6a) gezeigt ist, das mit S bezeichnete Nebenmaximum genutzt werden. Dazu wird sein Abstand Δt_{HS} zu dem bereits verwendeten Merkmal H gemessen, der hier Δt_{HS}=15 ps beträgt.

### Schritt 1: Bestimmung der Beziehung zwischen Verzögerungszeit und Ortsposition

Die präzise charakterisierte MMLD wird in Verbindung mit der Verschiebeeinheit in das erfindungsgemäße THz-Spektrometer eingebaut, wofür in Abhängigkeit von der Ausführung des Strahlumlenkers und der Wahl der Strahlführung mehrere Möglichkeiten (siehe Beispiele in Fig. 4 und 5 verfügbar sind.

Es wird eine QTDS-Messung durchgeführt, bei der der verfügbare Verschiebebereich der Verschiebeeinheit vollständig durchfahren wird (von einer Anfangsposition Δxₘᵢₙ bis zu einer Endposition Δxₘₐₓ). Der Verschiebebereich sollte hinreichend lang sein, dass mindestens eine, bevorzugt mindestens zwei, besonders bevorzugt 10 bis 15 Perioden T des Signals der MMLD messbar sind. Da 1 cm (bei gleichzeitiger Längenänderung von Emitter- und Detektorpfad) einer Zeitverzögerung von 66 ps entspricht, genügt ein 3,1 cm langer Verschiebebereich zur Messung von 5 Perioden der Dauer T=41 ps. Dieser ist bei den verfügbaren Verschiebeeinheiten stets gewährleistet.

Um die Reproduzierbarkeit dieses Verschiebebereiches sicherzustellen, werden Anfangs- oder Endposition durch einen Endschalter fixiert. Ausgehend von diesem Endschalter wird beim Durchfahren des Verschiebebereiches laufend die Ortsposition x der Verschiebeeinheit bestimmt, indem die Stellung des Antriebs der Verschiebeeinheit, z. B. die Schrittzahl eines Schrittmotors, ausgelesen wird. Bevorzugt werden sowohl Anfangsais auch Endposition durch jeweils einen Endschalter fixiert, sodass die Anzahl der Schritte eines Schrittmotors zwischen Anfangs- und Endposition jederzeit gezählt werden kann. Änderungen dieser Anzahl weisen auf Störungen des Aufbaus hin.

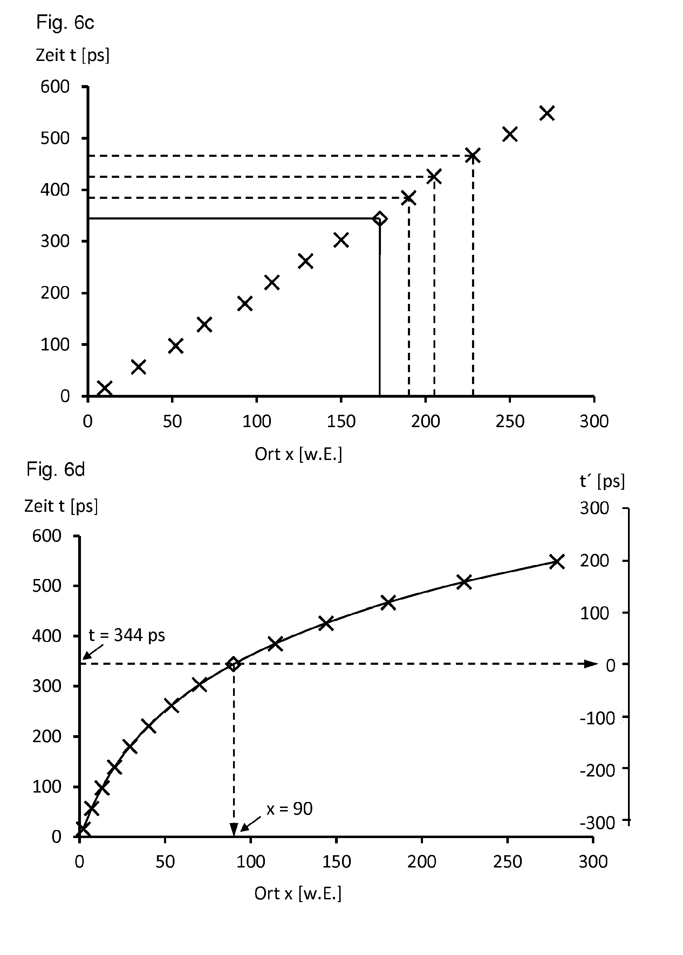

Im Verlauf der Messung werden die Hauptpeaks H mehrerer aufeinanderfolgender Perioden registriert, wobei ihre Amplitude und die zugehörige Ortsposition erfasst werden. Die Merkmale H, die im Zeitbereich als Folge mit äquidistanten Abständen von 41 ps auftreten, werden somit einer quantitativen Ortsposition zugeordnet. Fig. 6c und 6d zeigen zwei typische Messergebnisse. Es werden Stützstellen erzeugt, die die Beziehung zwischen einer linearen Zeitachse (äquidistante Merkmale H) und der vorab nicht bekannten Ortsachse herstellen. Die Angabe "w.E." (willkürliche Einheiten) ist proportional zur Stellung des Antriebs der Verschiebeeinheit, z. B. zu einer Schrittmotorposition. In Fig. 6c zeigen die Stützstellen, dass die Beziehung zwischen Orts- und Zeitachse annähernd linear ist, wobei reproduzierbare Abweichungen von der Linearität auftreten (die sich durch nicht-äquidistante Abstände der Stützstellen auf der Ortsachse äußern). In Fig. 6d zeigen die Stützstellen, dass die Beziehung zwischen Orts- und Zeitachse einen nichtlinearen glatten Verlauf aufweist. Durch Interpolation zwischen den Stützstellen wird in beiden Beispielen die Funktion t(x) für den gesamten gemessenen Zeitbereich ermittelt. (Treten große systematische Abweichungen von einem glatten Funktionsverlauf auf, sollte die Dichte der Stützstellen erhöht werden. Im vorliegenden Beispiel sind dazu die Stützstellen auf der Basis des Merkmals S verfügbar.) Für die Datenauswertung ist es lediglich wesentlich, dass Zeitdifferenzen korrekt wiedergegeben werden. Das ist durch die in äquidistanten Abständen von T=41 ps auftretenden Stützstellen (basierend auf dem Merkmal H) gewährleistet. Da es sich somit um eine relative Zeitachse handelt, ist der Nullpunkt der Zeitachse willkürlich wählbar und kann beliebig verschoben werden.

### Schritt 2: Auswahl eines optimalen Messintervalls

Durch einen Vergleich der Amplituden der Hauptpeaks H wird derjenige Puls bestimmt, bei dem der Peak H eine maximale Amplitude aufweist. Er ist in Fig. 6c und 6d durch ein Quadrat markiert. Im Maximum des Hauptpeaks H dieses Pulses erreicht die Verzögerungszeit den Wert null, Anrege- und Abfragesignal sind). Das auszuwählende Messintervall für THz-QTDS-Messungen sollte bevorzugt die Periode mit diesem Puls umfassen, da hier das höchste Signal/Rausch-Verhältnis erzielt wird.

Kann dieser Puls nicht eindeutig ermittelt werden, da die Amplituden der Hauptpeaks über den gesamten Messbereich monoton wachsen oder fallen, so weist das auf fehlerhaft eingestellte Pfadlängen der Messanordnung, d.h. eine grobe Abweichung von der Längenkonvention a+c=b, hin. Die Pfadlängen sind zu überprüfen und zu korrigieren. Danach sind die Schritte 1 und 2 solange zu wiederholen, bis der Puls, dessen Hauptpeak H eine maximale Amplitude aufweist, innerhalb des Messbereichs liegt. Ist die Funktion t(x) stark nichtlinear, so kann eine zusätzliche Feinkorrektur der Pfadlängen erforderlich sein, um eine maximale Auflösung im Zeitbereich zu erzielen. Im Beispiel gemäß Fig. 6d kann die Auflösung verbessert werden, wenn der durch ein Quadrat markierte Peak maximaler Amplitude zu größeren x-Werten verschoben wird. Das optimale Messintervall im Zeitbereich wird dadurch auf einen längeren Abschnitt der Ortsachse abgebildet. Eine Verschiebung zu kleineren x-Werten würde hingegen zu einer verschlechterten Auflösung führen. Auch nach einer solchen Feinkorrektur ist Schritt 1 zu wiederholen, d. h. die Funktion t(x) ist neu zu bestimmen. Vorzugsweise wird t(x) in der SMA gespeichert, sodass sie zur Auswertung nachfolgender QTDS-Messungen unmittelbar zur Verfügung steht.

### Schritt 3 (optional): Verschiebung der Zeitachse

Nach der Bestimmung von t(x) ist das Spektrometer bereits für THz-QTDS-Messungen einsetzbar, da für die nachfolgende Auswertung (Transformation in den Frequenzbereich) lediglich eine verzerrungsfreie relative Zeitachse (welche Zeitdifferenzen korrekt wiedergibt) erforderlich ist, was durch die vorab beschriebenen Schritte der Selbstreferenzierung sichergestellt ist. Eine absolute Skalierung der Zeitachse ist nicht notwendig.

Es ist aber zweckmäßig, die Zeitachse so zu verschieben, dass der Nullpunkt der Zeitachse dem ausgezeichneten Merkmal (in Fig. 6c,d: dem durch ein Quadrat markierten Hauptpeak H mit maximaler Amplitude) zugeordnet wird. Eine solche Transformation der Zeitachse t in die Zeitachse t' ist in Fig. 6d veranschaulicht. Die bei dieser Transformation, die eine reine Verschiebung ist, angewendete Zeitdifferenz (in Fig. 6d: 344 ps) sollte ebenfalls gespeichert werden.

Vorteilhaft ist die verschobene Zeitachse t' z. B. bei der Untersuchung dicker Proben, die ein THz-Signal um Zeitspannen im Bereich der Periodendauer T oder mehr verzögern, was zu einer entsprechenden zeitlichen Verschiebung des zur Festlegung des Nullpunktes der Zeitachse genutzten ausgezeichneten Merkmals, das eindeutig identifizierbar ist, führt. Diese Verschiebung kann auf der transformierten Zeitachse t' direkt abgelesen werden. Bei bekanntem Brechungsindex der Probe kann daraus unmittelbar deren Dicke berechnet werden. Umgekehrt kann bei bekannter Dicke der Probe unmittelbar deren Brechungsindex berechnet werden. Natürlich kann die zeitliche Verschiebung auch durch Differenzbildung von der ursprünglichen Zeitachse t abgelesen werden. Es kann auch die zeitliche Verschiebung eines anderen eindeutig identifizierbaren Merkmals genutzt werden. Schritt 3 ist somit optional.

Offensichtliche Modifikationen des beschriebenen Selbstreferenzierungsverfahrens fallen ebenfalls unter den mit dieser Anmeldung beanspruchten Schutzumfang. Z. B. ist leicht ersichtlich, dass zur Erzeugung der Stützstellen anstelle von Peakmaxima (wie bei den Merkmalen H und S) auch Nulldurchgänge des Messsignals gewählt werden können.

### Abbildungslegenden

Fig. 1: Schema eines THz-Spektrometers gemäß dem Stand der Technik
Fig. 2: Schemata zweier Ausführungsformen des erfindungsgemäßen THz-Spektrometers
Fig. 3: Schema einer vereinfachten Ausführungsform dieses THz-Spektrometers
Fig. 4: Schemata mehrerer Ausführungsformen eines Strahlumlenkers für das erfindungsgemäße THz-Spektrometer (für Strahlführung im Freistrahl)
Fig. 5: Schemata zweier Ausführungsformen eines als Fasersplitter ausgeführten Strahlumlenkers und seiner Anordnung in einem erfindungsgemäßen THz-Spektrometer
Fig. 6: Schematische Veranschaulichung des Selbstreferenzierungsverfahrens zur Kalibrierung einer Verschiebeeinheit

## Patentansprüche

1. THz-Spektrometer (20) zur kohärenten Detektion eines THz-Signals, aufweisend eine Laserquelle (11, 11", 11", 11"'), einen Strahlumlenker (22), eine THz-Emitterantenne (14), eine THz-Detektorantenne (15), optische Elemente zur Bildung eines Emitterpfads, der vom Strahlumlenker (22) zu einer THz-Emitterantenne (14) führt, und eines Detektorpfads, der vom Strahlumlenker (22) zu einer THz-Detektorantenne (15) führt, THz-Optiken in Form von THz-Linsen und/oder THz-Spiegeln zur Formung eines THz-Signals in einem THz-Pfad zwischen THz-Emitterantenne (14) und THz-Detektorantenne (15), in dem eine Probe anordenbar ist, und eine Steuer-, Mess- und Auswerteelektronik, wobei ein von der Laserquelle (11) emittiertes Ausgangssignal in den Strahlumlenker (22) einkoppelbar ist, durch den es in ein in den Emitterpfad lenkbares Anregesignal und in ein in den Detektorpfad lenkbares Abfragesignal zerlegbar ist, **dadurch gekennzeichnet, dass** der Strahlumlenker (22) oder zumindest ein mit ihm verbundenes Auskoppelelement (28b, 28a) auf einer Verschiebeeinheit (21) eines Verschiebetisches (24) angeordnet und gemeinsam mit der Verschiebeeinheit (21) verschiebbar ist, sodass zumindest das Abfragesignal parallel zur Verschieberichtung der Verschiebeeinheit (21) in einen zum Detektorpfad gehörenden Freistrahlabschnitt, dessen Länge durch Verschieben der Verschiebeeinheit (21) definiert änderbar ist, einkoppelbar ist.

2. THz-Spektrometer (20) nach Anspruch 1, **dadurch gekennzeichnet, dass** der auf der Verschiebeeinheit (21) angeordnete Strahlumlenker (22) einen Strahlteiler (22a) und einen Umlenkspiegel (22b) aufweist, wobei mithilfe des Strahlteilers (22a) eine Teilung des Ausgangssignals einer Laserquelle (11) in ein Anregesignal und ein Abfragesignal mit um 90° versetzter Ausbreitungsrichtung realisierbar ist und eines der durch die Teilung des Ausgangssignals erzeugten Signale mithilfe des Umlenkspiegels (22b) um weitere 90° umlenkbar ist, sodass Anregesignal und Abfragesignal in Richtung der Verschieberichtung der Verschiebeeinheit (21), jedoch entgegengesetztem Richtungssinn, in zwei Freistrahlabschnitte, die Teil des Emitterpfads bzw. Teil des Detektorpfads sind, lenkbar sind, sodass durch Verschieben der Verschiebeeinheit (21) mit dem darauf angeordneten Strahlumlenker (22) beide Pfade gleichzeitig entgegengesetzt zueinander definiert änderbar sind, sodass eine Verlängerung des eines Pfades mit einer betragsmäßig gleichen Verkürzung des anderen Pfades verbunden ist.

3. THz-Spektrometer (20) nach Anspruch 2, **dadurch gekennzeichnet, dass** die Laserquelle (11) und der Strahlumlenker (22) starr miteinander verbunden als verschiebbares Modul (23) auf der Verschiebeeinheit (21) des Verschiebetisches (24) angeordnet sind.

4. THz-Spektrometer (20) nach Anspruch 2, **dadurch gekennzeichnet, dass** die Laserquelle (11') außerhalb oder am Rand des Verschiebetisches (24) fixiert ist.

5. THz-Spektrometer (20) nach Anspruch 1, **dadurch gekennzeichnet, dass** der Strahlumlenker (22) als Fasersplitter (26) mit einer optischen Faser (25, 25", 25"') als Eingang und zwei optischen Fasern (27a, 27b) als Ausgängen ausgeführt ist, wobei die optische Faser (25, 25", 25"') mit einer Laserquelle (11, 11 ", 11"') verbunden ist und der eine Ausgang über optische Fasern (27a, 31 a) mit der THz-Emitterantenne (14) und der andere Ausgang über optische Fasern (27b, 31 b) mit der THz-Detektorantenne (15) verbunden sind, wobei zumindest die den Detektorpfad bildende Verbindung zwischen dem Fasersplitter (26) und der THz-Detektorantenne (15) einen durch ein Auskoppelelement (28b) und ein Einkoppelelement (30b) begrenzten Freistrahlabschnitt aufweist, dessen Länge durch Verschieben der Verschiebeeinheit (21) mit dem darauf angeordneten Auskoppelelement (28b) definiert änderbar ist.

6. THz-Spektrometer (20) nach Anspruch 5, **dadurch gekennzeichnet, dass** die den Detektorpfad bildende Verbindung zwischen dem Fasersplitter (26) und der THz-Detektorantenne (15) einen durch ein Auskoppelelement (28b) und ein Einkoppelelement (30b) begrenzten Freistrahlabschnitt und die den Emitterpfad bildende Verbindung zwischen dem Fasersplitter (26) und der THz-Emitterantenne (14) einen durch ein Auskoppelelement (28a) und ein Einkoppelelement (30a) begrenzten Freistrahlabschnitt aufweisen, deren Längen durch Verschieben der Verschiebeeinheit (21) mit den darauf angeordneten Auskoppelelementen (28b, 28a) gleichzeitig entgegengesetzt zueinander definiert änderbar sind, sodass eine Verlängerung des einen Pfades mit einer betragsmäßig gleichen Verkürzung des anderen Pfades verbunden ist.

7. THz-Spektrometer (20) nach einem der vorangehenden Ansprüche, **dadurch gekennzeichnet, dass** die Laserquelle (11) als Multimode-Laserdiode, die äquidistante Lasermoden mit einem Frequenzabstand Δf emittiert, ausgeführt ist.

8. THz-Spektrometer (20) nach einem der vorangehenden Ansprüche, **dadurch gekennzeichnet, dass** als Verschiebeeinheiten (21) geeignete kommerziell verfügbare Standardkomponenten eingesetzt werden, umfassend
- Verschiebeeinheiten aus optischen Laufwerken,
- Verschiebeeinheiten aus Tintenstrahldruckern,
- Verschiebeeinheiten für Werkzeugmaschinen.

9. Verfahren zur Gewinnung von THz-Spektren einer Probe mit dem THz-Spektrometer (20) nach einem der Ansprüche 1 bis 8, **dadurch gekennzeichnet, dass**
- ein Messintervall gewählt wird, das charakterisiert ist durch einen Anfangswert Atₘᵢₙ, einen Endwert Δtₘₐₓ und mindestens eine Schrittweite Δt im Zeitbereich oder durch entsprechende Angaben auf einer Ortsachse,
- eine THz-Referenzmessung erfolgt, indem eine Verzögerungszeit zwischen einem durch ein Anregesignal ausgelösten THz-Signal und einem Abfragesignal durch Verschiebung der Verschiebeeinheit (21) auf dem Verschiebetisch (24) über den Bereich des gewählten Messintervalls <Δtₘᵢₙ, Δtₘₐₓ> durchgestimmt wird und ein THz-Referenzsignal im Zeitbereich am Ort der THz-Detektorantenne im Sampling-Verfahren registriert und in der Steuer-, Mess- und Auswerteelektronik gespeichert wird,
- eine Probe im THz-Pfad zwischen der THz-Emitterantenne (14) und der THz-Detektorantenne (15) platziert wird,
- eine THz-Messung erfolgt, indem eine Verzögerungszeit zwischen einem durch ein Anregesignal ausgelösten THz-Signal und einem Abfragesignal durch Verschiebung der Verschiebeeinheit (21) auf dem Verschiebetisch (24) über den Bereich des gewählten Messintervalls <Δtₘᵢₙ, Δtₘₐₓ> durchgestimmt wird und ein THz-Messsignal, das durch Wechselwirkung mit der Probe Informationen über dieselbe aufgenommen hat, im Zeitbereich am Ort der THz-Detektorantenne im Sampling-Verfahren registriert und in der Steuer-, Mess- und Auswerteelektronik gespeichert wird,
- THz-Referenzsignal und THz-Messignal mithilfe bekannter THz-TDS-Algorithmen weiterverarbeitet werden.

10. Verfahren nach Anspruch 9, **dadurch gekennzeichnet, dass** durch Vergleich des THz-Messsignals mit dem THz-Referenzsignal eine durch die Probe bedingte Zeitverschiebung eines eindeutig identifizierbaren Merkmals in diesen Signalen gemessen wird, aus der die Probendicke (bei bekanntem Brechungsindex der Probe) oder der Brechungsindex der Probe (bei bekannter Probendicke) berechnet wird.

11. Selbstreferenzierungsverfahren zur Kalibrierung einer Verschiebeeinheit (21) eines THz-Spektrometers (20) gemäß einem der Ansprüche 1 bis 8, **dadurch gekennzeichnet, dass** die Beziehung t(x) zwischen einer Ortsachse x, die die Position der Verschiebeeinheit (21) auf dem Verschiebetisch (24) beschreibt, und einer relativen Zeitachse t, die eine Zeitverzögerung der an der THz-Detektorantenne (15) eintreffenden Signale, also des durch das Anregesignal ausgelösten THz-Signals und des Abfragesignals, wiedergibt, ermittelt wird, indem äquidistante Stützstellen mit einem Zeitabstand T auf der Zeitachse t, die aus einer Folge von periodisch im bekannten Zeitabstand T=1/Δf auftretenden gleichartigen Merkmalen H des Signals einer Multimode-Laserdiode, die äquidistante Lasermoden mit dem Frequenzabstand Δf emittiert, bestimmt werden, den bei Auftreten der Merkmale H gemessenen Positionen auf der Ortsachse x zugeordnet werden.

12. Selbstreferenzierungsverfahren nach Anspruch 11, **dadurch gekennzeichnet, dass** neben den Merkmalen H weitere Merkmale S zur Gewinnung von Stützstellen herangezogen werden.

13. Selbstreferenzierungsverfahren nach Anspruch 11 oder 12, **dadurch gekennzeichnet, dass** die relative Zeitachse in eine absolute Zeitachse überführt wird, indem der Amplitudengang des gemessenen quasiperiodischen THz-Signals erfasst wird und der Nullpunkt der Zeitachse einem Merkmal des THz-Signals in der Periode mit der maximalen Amplitude zugeordnet wird.

14. Verwendung des THz-Spektrometers (20) gemäß einem der Ansprüche 1 bis 8 als THz-Quasizeitbereichsspektrometer.

15. Verwendung des THz-Spektrometers (20) gemäß einem der Ansprüche 1 bis 8 als THz-Zeitbereichsspektrometer oder als THz-CW-Spektrometer.
